# EUROPEAN PATENT SPECIFICATION

(11) **EP 4 339 755 B1**
(45) Date of publication and mention of the grant of the patent: **20.05.2026**
(21) Application number: 22927590.4
(22) Date of filing: 09.12.2022
(51) Int. Cl.: G06Q 30/0251, G06F 9/451, G06F 3/0486, G06F 3/04817, G06F 3/0482, G06Q 50/10

(54) **SERVICE CARD DISPLAY METHOD, ELECTRONIC DEVICE, AND STORAGE MEDIUM**
DIENSTKARTENANZEIGEVERFAHREN, ELEKTRONISCHE VORRICHTUNG UND SPEICHERMEDIUM
PROCÉDÉ D'AFFICHAGE DE CARTE DE SERVICE, DISPOSITIF ÉLECTRONIQUE ET SUPPORT DE STOCKAGE

(30) Priority: 25.07.2022 CN 202210874976
(43) Date of publication of application: 20.03.2024
(73) Proprietor: Honor Device Co., Ltd., Shenzhen, Guangdong 518040 (CN)
(72) Inventor: HAN, Canyang, Shenzhen Guangdong 518040 (CN); WANG, Xiaolong, Shenzhen Guangdong 518040 (CN); HUANG, Hua, Shenzhen Guangdong 518040 (CN)
(74) Representative: Epping - Hermann - Fischer
(86) International application number: PCT/CN2022/138103
(87) International publication number: WO 2024/021437

(56) References cited:
- CN-A- 110 692 034
- CN-A- 111 738 679
- CN-A- 112 241 867
- CN-A- 113 888 159
- CN-A- 114 531 511
- CN-A- 115 097 989
- KR-A- 20210 109 410
- US-A1- 2021 018 958
- HALTER HALLEI: "How to Customize Your iPhone Share Sheet & Favorite Apps in iOS 15", 23 December 2021 (2021-12-23), XP055909103, Retrieved from the Internet <URL:https://www.iphonelife.com/content/how-to-rearrange-app-icons-share-tab> [retrieved on 20220405]
- QUICK TECH: "How To Share A Song On Apple Music", 15 April 2022 (2022-04-15), XP093196481, Retrieved from the Internet <URL:https://www.youtube.com/watch?v=fDvX5P1UQC0> [retrieved on 20240819]
- APPLE SUPPORT: "How to share lyrics in Apple Music on iPhone, iPad, and iPod touch - Apple Support", 28 April 2021 (2021-04-28), XP093196490, Retrieved from the Internet <URL:https://www.youtube.com/watch?v=K9_dJqUZ-2g> [retrieved on 20240819]
- NABEEL NAWAB: "How to send image as document in WhatsApp on iPhone | iPhone Image to PDF", 21 July 2021 (2021-07-21), XP093263671, Retrieved from the Internet <URL:https://www.youtube.com/watch?v=OvE6MB9Bz60> [retrieved on 20250326]

## Description

This application claims priority to Chinese Patent Application No. 202210874976.6, filed with the China National Intellectual Property Administration on July 25, 2022 and entitled "SERVICE WIDGET DISPLAY METHOD, ELECTRONIC DEVICE, AND STORAGE MEDIUM".

### TECHNICAL FIELD

This application relates to the field of terminal technologies, and in particular, to a service widget display method, an electronic device, and a storage medium.

### BACKGROUND

As terminal devices are increasingly popularized, people often use services provided by various applications on the terminal devices to perform various activities, for example, use a transport code to take a public transport, use Scan to unlock a bicycle, or use a payment/collection code to perform a transaction.

Currently, service information displayed when the terminal device responds to an operation of invoking a service widget by a user is usually a fixed service preset on the terminal device. If the currently displayed service information does not include a service (a target service) to be used by the user, the user further needs to continue to perform another operation to reach the target service. Consequently, experience of using the service widget by the user is degraded.

Therefore, a service widget capable of intelligently recommending a service to a user is urgently required to improve user experience.

Document "How to Customize Your iPhone Share Sheet & Favorite Apps in iOS 15" by Halter Hallei (https://www.iphonelife.com/content/how-to-rearrange-appicons-share-tab) relates to customizing an iOS 15 share sheet.

CN 113 888 159 A relates to an intelligent recommendation technology and in particular to a method and electronic device for opening a function page of an application which can recommend more appropriate service icons to users in combination with the scenario in which the electronic device is located.

CN 111 738 679 A relates to an information recommendation method, a readable storage medium and a terminal. The method comprises: obtaining user data; displaying an information card based on the user data, and at least one of the current time, the current location, and/or the length of time the user uses the associated software, the associated function, or the information card.

### SUMMARY

This application provides a service widget display method according to claim 1, an electronic device according to claim 12, and a storage medium according to claim 13, so that a suitable service can be recommended to a user based on a current scenario of the electronic device and a habit of the user, thereby improving user experience.

According to a first aspect, a service widget display method is provided. The method is applied to an electronic device, and the method includes: receiving a first operation of a user in a first state; displaying a first service widget in response to the first operation, where the first service widget includes a first target service; receiving a second operation of the user in a second state; and displaying a second service widget in response to the second operation, where the second service widget includes a second target service; and the first target service is different from the second target service, and one or more of the following information of the electronic device in the first state and the second state are different: a current location and current time of the electronic device. Current locations of the electronic device in the first state and the second state are different, in other words, when a service widget is invoked at different locations, different services are recommended to the user. Alternatively, locations are the same but time is different in the first state and the second state, in other words, different services are recommended to the user at a same location and in different time periods. According to this embodiment of this application, when an operation of invoking a service widget by the user is received, a service that is most likely to be used by the user may be recommended based on the current location and/or the current time of the electronic device, so that when using a service provided by an application, the user does not need to invoke a corresponding service by performing another operation. Therefore, steps are simple, and operations are convenient. In addition, a service page can be directly reached, so that user experience is improved.

With reference to the first aspect, in some implementations of the first aspect, the first target service includes a plurality of sub-services, and the displaying a first service widget in response to the first operation includes: displaying a first sub-service in the first service widget in response to the first operation.

The first sub-service is one of the plurality of sub-services.

In this application, when a target service includes a plurality of sub-services, and the terminal device receives an operation of invoking a service widget by the user, the terminal device may accurately recommend a sub-service of the service to the user based on the current location and/or time, so that user experience is improved.

With reference to the first aspect, in some implementations of the first aspect, the method further includes: receiving a third operation of the user in a third state, where one or more of the following information of the electronic device in the third state and the first state are different: the current location and the current time of the electronic device; and displaying a third service widget in response to the third operation, where the third service widget includes a second sub-service, the second sub-service is one of the plurality of sub-services, and the second sub-service is different from the first sub-service.

Current locations of the electronic device in the third state and the first state are different, in other words, when a service widget is invoked at different locations, different services are recommended to the user. Alternatively, locations are the same but time is different in the first state and the third state, in other words, different services are recommended to the user at a same location and in different time periods. According to this embodiment of this application, when an operation of invoking a service widget by the user is received, a sub-service that is most likely to be used by the user may be recommended based on the current location and/or the current time of the electronic device, so that recommendation accuracy is improved. In this way, the user may not need to select a corresponding sub-service of a recommended service again, so that user experience is improved.

With reference to the first aspect, in some implementations of the first aspect, the method further includes: receiving a fourth operation performed by the user on the first service widget; and switching the first sub-service in the first service widget to a third sub-service in response to the fourth operation, where the third sub-service is one of the plurality of sub-services, and the third sub-service is different from the first sub-service.

Based on this, in response to the fourth operation, the electronic device switches a service displayed on a current service widget, so that when the user needs to use different services provided by a same service, the user can quickly switch to another sub-service. Therefore, operation steps are simple, and user experience of using different sub-services is improved.

With reference to the first aspect, in some implementations of the first aspect, the method further includes: after the first service widget is displayed, receiving a fifth operation performed by the user on the first service widget; and switching the first target service in the first service widget to a third target service in response to the fifth operation.

Based on this, in response to the fifth operation, the electronic device switches a service displayed on a current service widget to another service, so that when the user needs to use services provided by different applications, the user can quickly switch to another service without exiting a current application to invoke a corresponding service from another application. Therefore, operation steps are simple, and user experience can be improved.

With reference to the first aspect, in some implementations of the first aspect, the first service widget and the second service widget include a first area and a second area, the first area includes one or more service options, and the second area is used to display service information corresponding to a selected service option.

The service option may be a service icon shown below. The first area is used to display the service icon, and the second area is used to display a service, namely, the service information, recommended by the electronic device.

It should be understood that the service option corresponding to the selected service information may not be included in the first area.

In this application, other service options are displayed on a service widget, so that when the user is dissatisfied with a service recommended by the electronic device, the user can quickly switch, by using the service options displayed on the service widget, to a service that the user expects to use, thereby improving user experience.

With reference to the first aspect, in some implementations of the first aspect, the first area includes a first sub-area and a second sub-area, the first sub-area is used to display a first-type service option, and a user of the second sub-area displays a second-type service option.

With reference to the first aspect, in some implementations of the first aspect, the first-type service option is a service option preset by the user, and the second-type service option is a service option recommended by the electronic device to the user.

With reference to the first aspect, in some implementations of the first aspect, a service corresponding to the second-type service option is a second-type service, and the second-type service includes the first target service, the second target service, or the third target service.

In this application, a service option preset by the user may be displayed on a service widget invoked each time. It may be understood that a service corresponding to this type of service option is a service most frequently used by the user. Therefore, displaying the first-type service on the service widget invoked each time can meet a requirement of the user for switching to a common service in any scenario.

With reference to the first aspect, in some implementations of the first aspect, the first service widget and the second service widget include a plurality of same service options, and an order of the plurality of service options in a first area of the first service widget is different from an order of the plurality of service options in a first area of the second service widget.

With reference to the first aspect, in some implementations of the first aspect, a service option corresponding to the first target service is located at a first location in the first area of the first service widget, and a service option corresponding to the second target service is located at a second location in the first area of the first service widget; and the service option corresponding to the second target service is located at a third location in the first area of the second service widget, and the service option corresponding to the first target service is located at a fourth location in the first area of the second service widget, where a location of the first location in the first area is the same as a location of the third location in the first area; and a location of the second location in the first area is the same as or different from a location of the fourth location in the first area.

When recommending a service, the electronic device also displays a service option corresponding to the service at a fixed location in a first area of a service widget, for example, a leftmost location of the first area. Therefore, locations of service options corresponding to services recommended by the electronic device in different scenarios are the same. **In** this recommendation manner, the user can quickly learn of a location of a service option corresponding to a service recommended by the electronic device.

With reference to the first aspect, in some implementations of the first aspect, at least one service option is different in a plurality of service options included in the first service widget and a plurality of service options included in the second service widget.

With reference to the first aspect, in some implementations of the first aspect, the plurality of service options included in the first service widget include a first service option, the first service option is different from the plurality of service options included in the second service widget, and a service corresponding to the first service option is the first target service.

With reference to the first aspect, in some implementations of the first aspect, the plurality of service options included in the second service widget include a second service option, the second service option is different from the plurality of service options included in the first service widget, and a service corresponding to the second service option is the second target service.

With reference to the first aspect, in some implementations of the first aspect, the service option includes one or more of the following services: a code scanning service, a payment service, a collection service, a check-in service, and a transport service.

With reference to the first aspect, in some implementations of the first aspect, in the first state, the electronic device is running a first application, and displays an application interface of the first application; in a process in which the electronic device displays the first service widget, the electronic device continues running the first application; and the method further includes: The electronic device receives a sixth operation performed by the user on the first target service; and in response to the sixth operation, the electronic device completes the first target service, exits the first service widget, and displays the application interface of the first application.

With reference to the first aspect, in some implementations of the first aspect, the first application includes an application that supports playback of video or audio content, and the electronic device keeps the first application playing a video or audio in the process in which the electronic device displays the first service widget.

In this application, when the electronic device receives an operation of invoking a service widget, if there is a running application in the foreground, the electronic device displays the first service widget on the currently running application without interrupting the currently running application. In addition, when the electronic device exits the first service widget, the electronic device may continue to display an application interface of the application. According to this method, after completing using a service provided by the service widget, the user may not need to enable the previous application again, so that user experience is improved.

With reference to the first aspect, in some implementations of the first aspect, in the first state, the electronic device is in any one of the following states: a screen-off state, a screen-on locked state, and a screen-on unlocked state.

Based on this, when using a service provided by each application, the user may not need to invoke a corresponding service in an unlocked state of the electronic device, so that user experience is improved.

According to a second aspect, an embodiment of this application provides an electronic device, including a processor and a memory. The memory is configured to store code instructions, and the processor is configured to run the code instructions, so that the electronic device is enabled to perform the method according to any one of the first aspect or the implementations of the first aspect.

Optionally, the electronic device further includes the memory.

Optionally, the electronic device further includes a communication interface, and the processor is coupled to the communication interface.

According to a third aspect, this application provides a processor, including an input circuit, an output circuit, and a processing circuit. The processing circuit is configured to: receive a signal by using the input circuit, and transmit a signal by using the output circuit, so that the processor is enabled to perform the method according to any one of the possible implementations of the first aspect.

In a specific implementation process, the processor may be a chip, the input circuit may be an input pin, the output circuit may be an output pin, and the processing circuit may be a transistor, a gate circuit, a flip-flop, any logic circuit, or the like. The input signal received by the input circuit may be received and input by, for example, a receiver. The signal output by the output circuit may be output to and transmitted by, for example, a transmitter. The input circuit and the output circuit may be a same circuit, and the circuit separately serves as the input circuit and the output circuit at different moments. Specific implementations of the processor and various circuits are not limited in this application.

According to a fourth aspect, this application provides a processing apparatus, including a processor and a memory. The processor is configured to read instructions stored in the memory, and can receive a signal by using a receiver and transmit a signal by using a transmitter, to perform the method according to any one of the possible implementations of the first aspect.

Optionally, there are one or more processors, and there are one or more memories.

Optionally, the memory and the processor may be integrated, or the memory and the processor are separately disposed.

In a specific implementation process, the memory may be a non-transitory (non-transitory) memory, for example, a read-only memory (read only memory, ROM). The memory and the processor may be integrated into a same chip, or may be separately disposed on different chips. A type of the memory and disposing manners of the memory and the processor are not limited in this application.

The processing apparatus in the fourth aspect may be a chip. The processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory, where the memory may be integrated into the processor, or may be located outside the processor and exist independently.

According to a fifth aspect, an embodiment of this application provides a computer-readable storage medium. The computer-readable storage medium stores instructions, and when the instructions are executed, a computer is enabled to perform the method described in any one of the first aspect or the implementations of the first aspect.

According to a sixth aspect, a computer program product includes a computer program, and when the computer program is run, a computer is enabled to perform the method described in any one of the first aspect or the implementations of the first aspect.

### BRIEF DESCRIPTION OF DRAWINGS

FIG. 1A to FIG. 1F are a schematic diagram of a scenario according to an embodiment of this application;
FIG. 2A to FIG. 2E are a schematic diagram of another scenario according to an embodiment of this application;
FIG. 3A to FIG. 3G are a schematic diagram of still another scenario according to an embodiment of this application;
FIG. 4 is a schematic diagram of a structure of a terminal device according to an embodiment of this application;
FIG. 5A to FIG. 5E are a schematic diagram of an interface of a service widget according to an embodiment of this application;
FIG. 6A to FIG. 6C are a schematic diagram of an interface of another service widget according to an embodiment of this application;
FIG. 7A(1) to FIG. 7A(5) are a schematic diagram of an interface of still another service widget according to an embodiment of this application;
FIG. 7B(1) and FIG. 7B(2) are a schematic diagram of an interface of yet another service widget according to an embodiment of this application;
FIG. 8A to FIG. 8E are a schematic diagram of an interface of switching a service widget according to an embodiment of this application;
FIG. 9A and FIG. 9B are a schematic diagram of another interface of switching a service widget according to an embodiment of this application;
FIG. 10A(1) to FIG. 10A(5) are a schematic diagram of an interface of a service icon custom-adding process according to an embodiment of this application;
FIG. 10B(1) and FIG. 10B(2) are a schematic diagram of an interface of another service icon custom-adding process according to an embodiment of this application;
FIG. 11A to FIG. 11E are a schematic diagram of an interface in which a terminal device invokes a service widget in a screen-off state according to an embodiment of this application;
FIG. 12A to FIG. 12E are a schematic diagram of an interface in which a terminal device invokes a service widget in a screen locked state according to an embodiment of this application;
FIG. 13A to FIG. 13C are a schematic diagram of an interface in which a terminal device invokes a service widget in a home screen state according to an embodiment of this application;
FIG. 14A to FIG. 14C are a schematic diagram of an interface in which a terminal device invokes a service widget in an application running state according to an embodiment of this application;
FIG. 15 is a schematic flowchart of a service display method according to an embodiment of this application;
FIG. 16A and FIG. 16B are a schematic diagram of invoking a service widget according to an embodiment of this application; and
FIG. 17 is a schematic block diagram of an electronic device according to an embodiment of this application.

### DESCRIPTION OF EMBODIMENTS

The following describes the technical solutions in this application with reference to the accompanying drawings.

To clearly describe the technical solutions in embodiments of this application, in embodiments of this application, words such as "first" and "second" are used to distinguish between same items or similar items with basically the same functions and effects. For example, a first operation and a second operation are merely intended to distinguish between different times of operations, but not to limit a sequential order thereof. A person skilled in the art may understand that the words such as "first" and "second" do not limit a quantity and an execution sequence, and the words such as "first" and "second" do not indicate a definite difference.

It should be noted that, in this application, the word such as "example" or "for example" is used to represent giving an example, an illustration, or a description. Any embodiment or design solution described as "example" or "for example" in this application should not be construed as more preferred or advantageous than other embodiments or design solutions. Exactly, use of the word such as "example" or "for example" is intended to present a related concept in a specific manner. In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects. "At least one of the following items" or a similar expression means any combination of these items, including any combination of a single item or a plurality of items. For example, at least one of a, b, or c may represent a, b, c, a and b, a and c, b and c, or a, b, and c, where a, b, and c may be singular or plural. An electronic device in this application may also be referred to as a terminal (terminal) device, user equipment (user equipment, UE), a mobile station (mobile station, MS), a mobile terminal (mobile terminal, MT), or the like. The terminal device may be a mobile phone (mobile phone) with a touchscreen, a smart TV, a wearable device, a tablet computer, a computer with a wireless sending/receiving function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in embodiments of this application.

The following uses a mobile phone as an example of an electronic device, to describe a process of invoking a plurality of services by a user in detail with reference to a specific scenario.

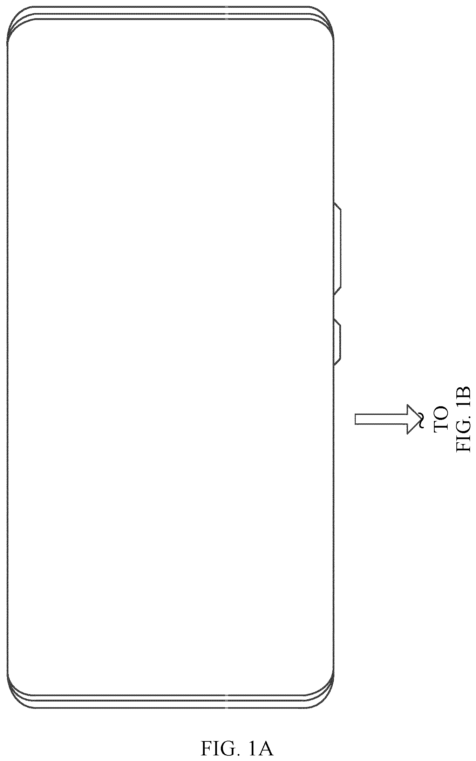

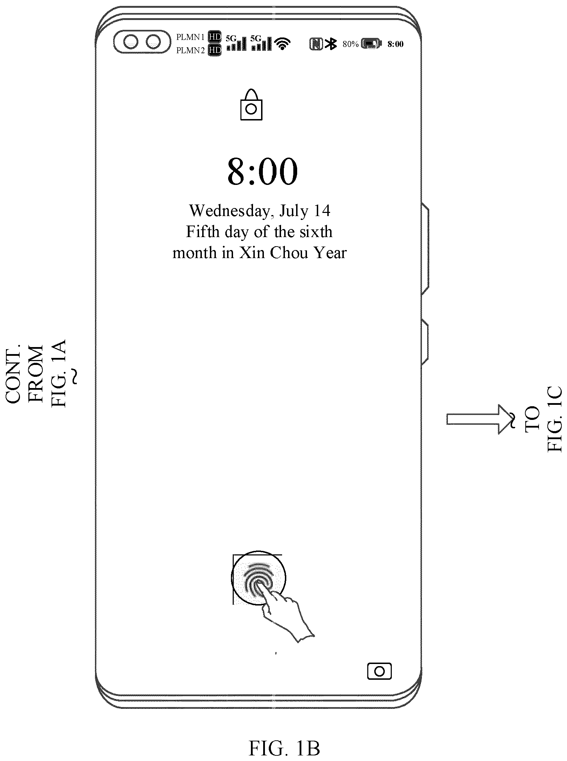

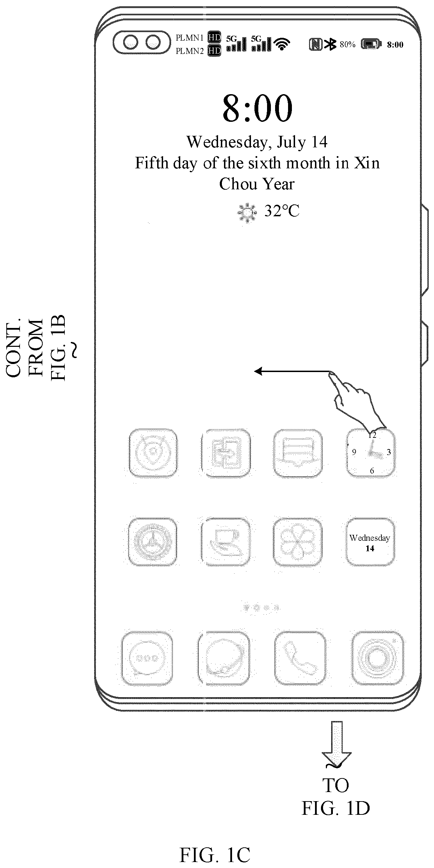

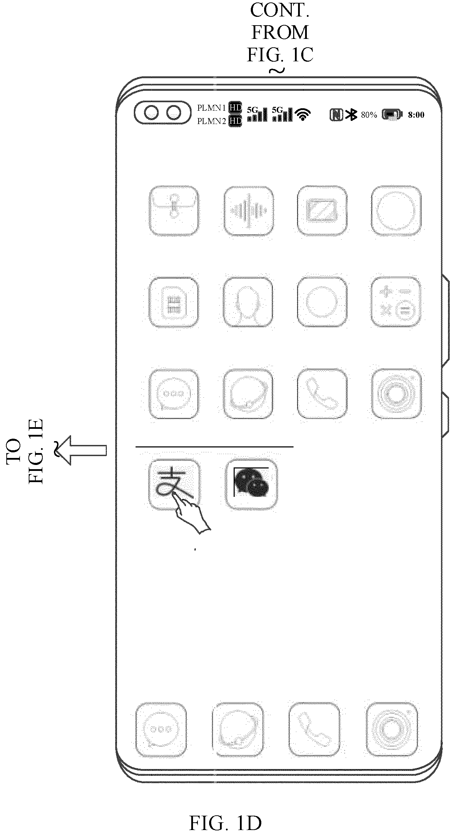

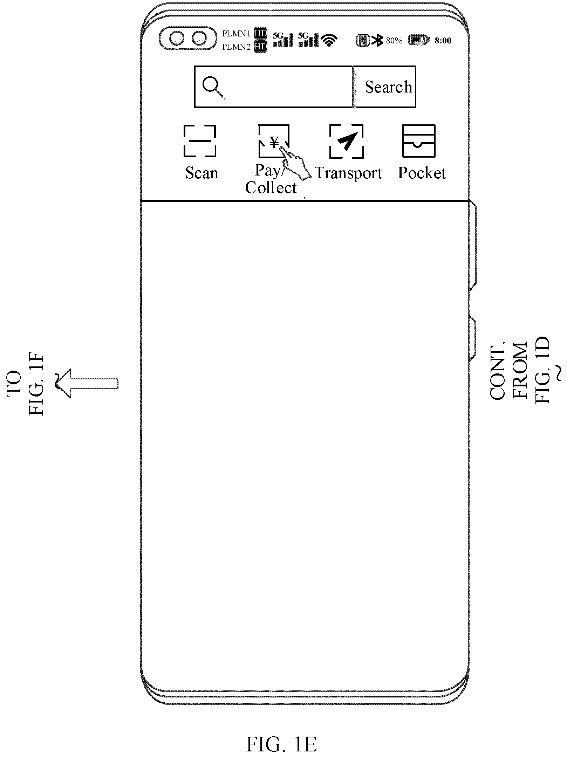

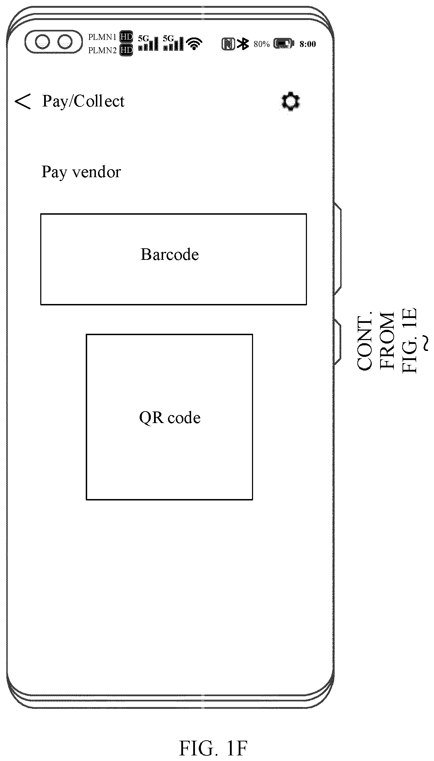

FIG. 1A to FIG. 1F are a schematic diagram of a scenario according to an embodiment of this application. The scenario is a scenario in which the user performs payment by using Alipay Pay/Collect. As shown in FIG. 1A, the mobile phone is in a screen-off state. When the mobile phone receives an unlocking operation of the user, the mobile phone may sequentially display an interface shown in FIG. 1B and an interface shown in FIG. 1C. In the interface shown in FIG. 1C, when receiving an operation of sliding the current interface by the user, the mobile phone displays an interface shown in FIG. 1D. In the interface shown in FIG. 1D, the mobile phone receives an operation of tapping an Alipay icon by the user, and displays an interface shown in FIG. 1E. In the interface shown in FIG. 1E, the mobile phone receives an operation of tapping a Pay/Collect icon by the user, and displays an interface shown in FIG. 1F. The interface is a page of an Alipay payment service, and includes an Alipay payment QR code and payment barcode.

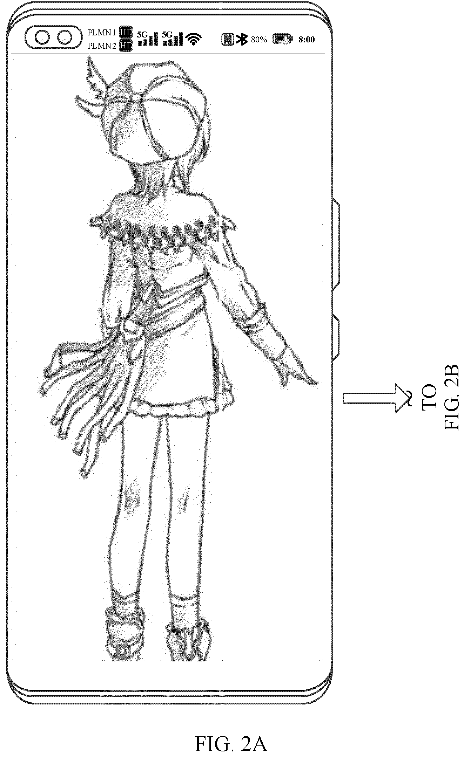

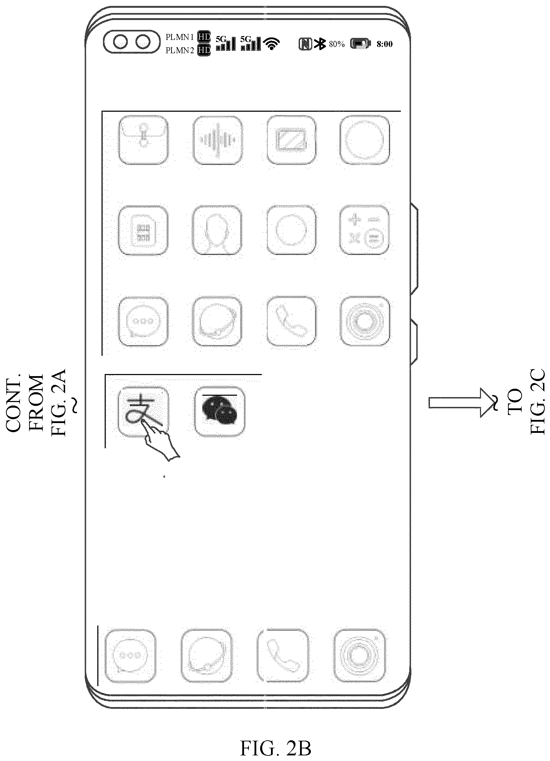

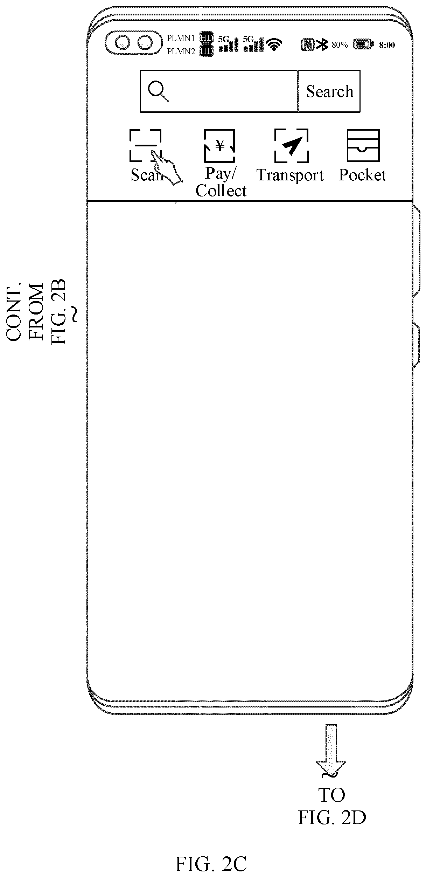

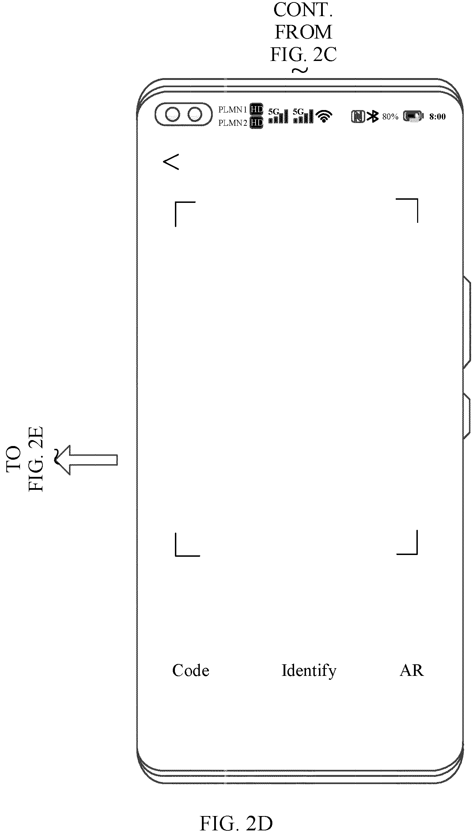

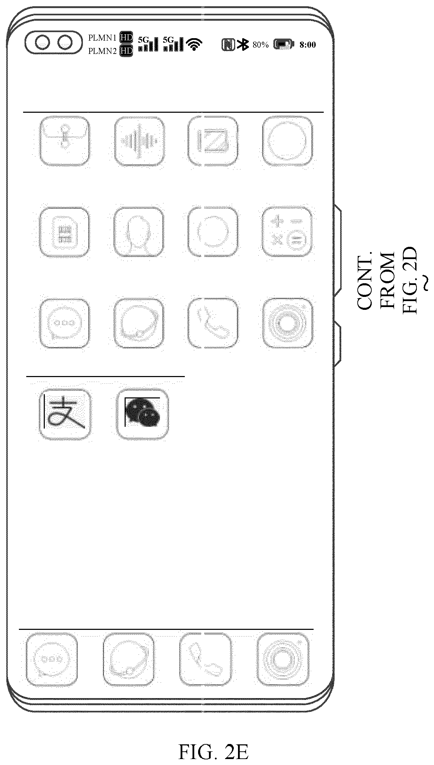

FIG. 2A to FIG. 2E are a schematic diagram of another scenario according to an embodiment of this application. The scenario is a scenario in which the user uses an Alipay Scan service. For an interface shown in FIG. 2A, the interface is a video playback interface. The mobile phone receives an operation of returning to a home screen by the user, and displays an interface shown in FIG. 2B. In the interface shown in FIG. 2B, the mobile phone receives an operation of tapping an Alipay icon by the user, and displays an interface shown in FIG. 2C. In the interface shown in FIG. 2C, the mobile phone receives an operation of tapping a Scan icon by the user, and displays an interface shown in FIG. 2D. In the interface shown in FIG. 2D, when receiving an operation of exiting the current service by the user, the mobile phone displays an interface shown in FIG. 2E, and cannot directly return to the interface shown in FIG. 2A, and therefore a video playback service is interrupted.

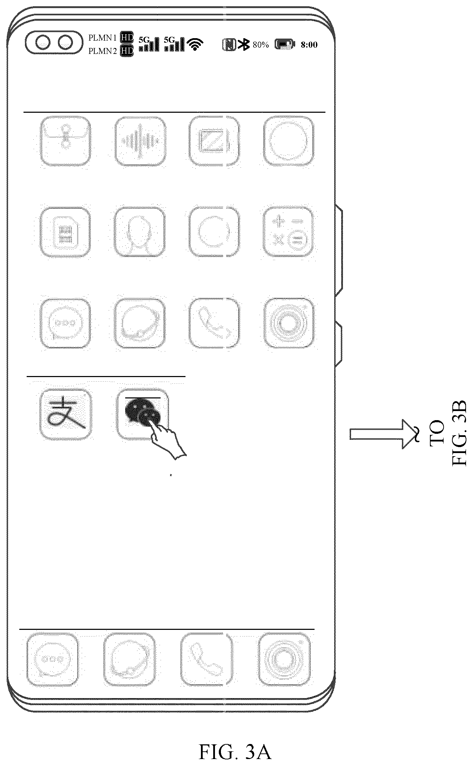

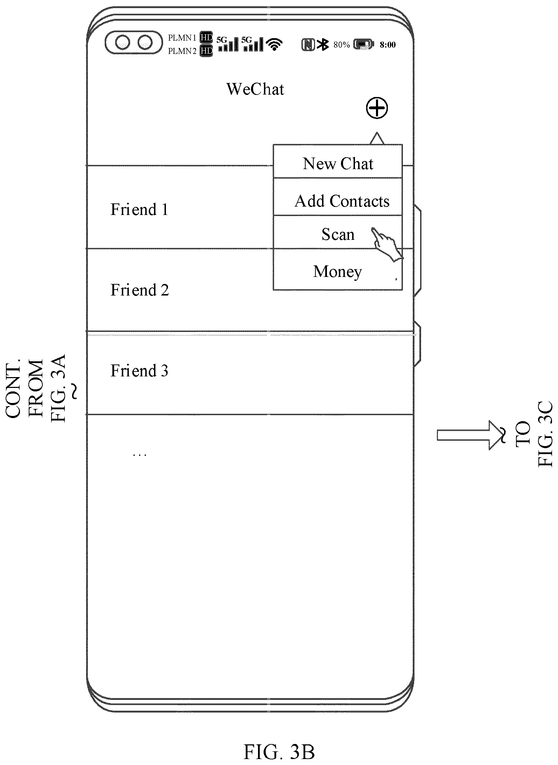

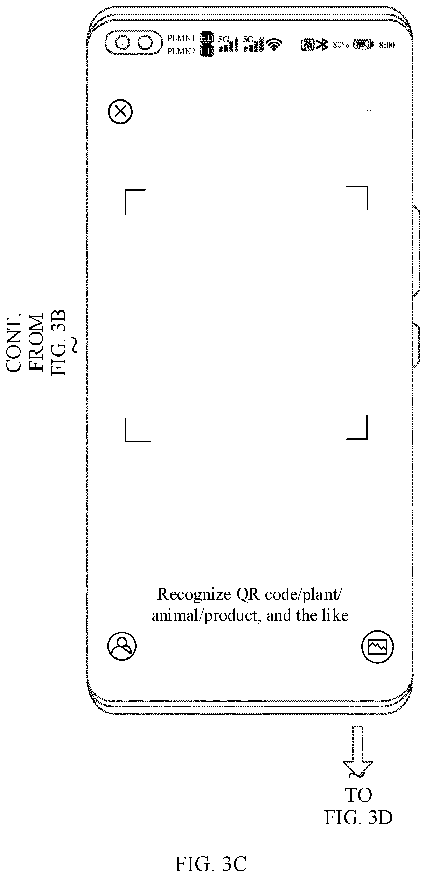

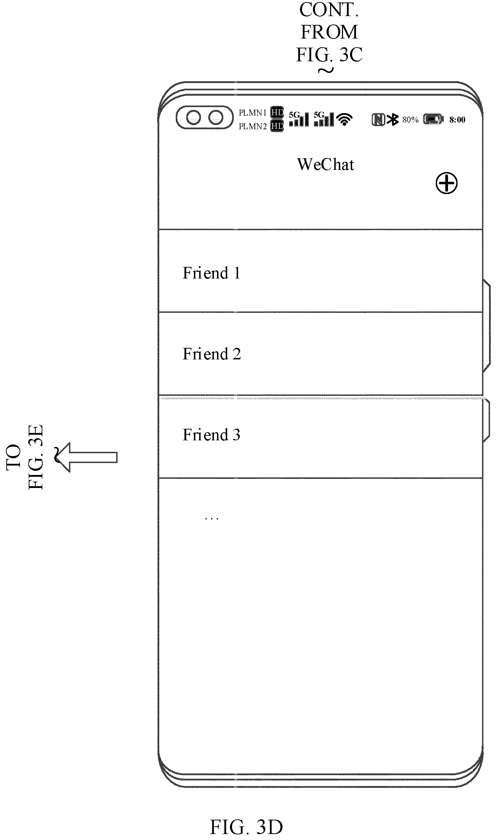

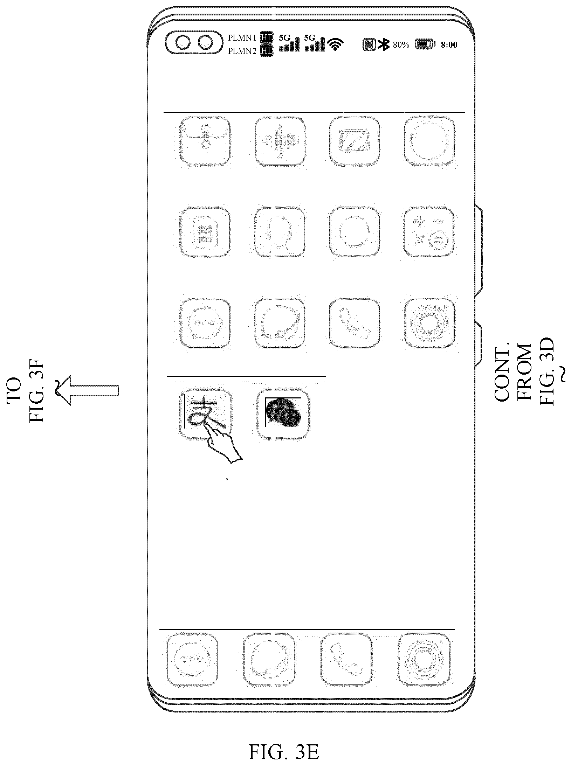

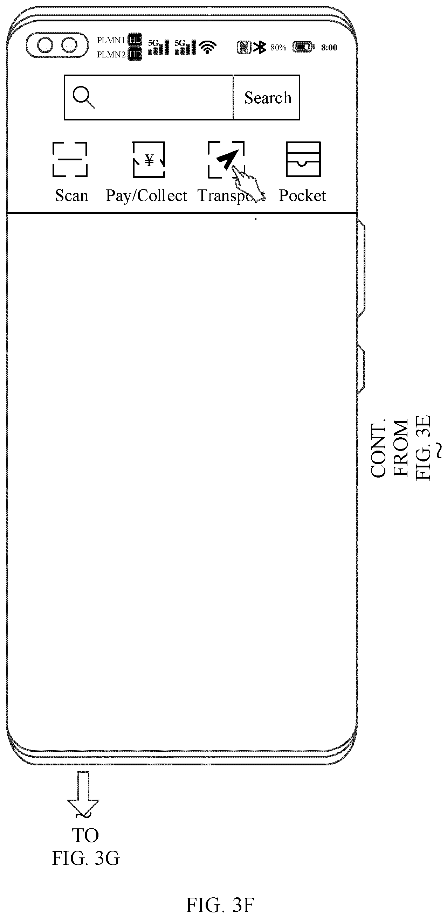

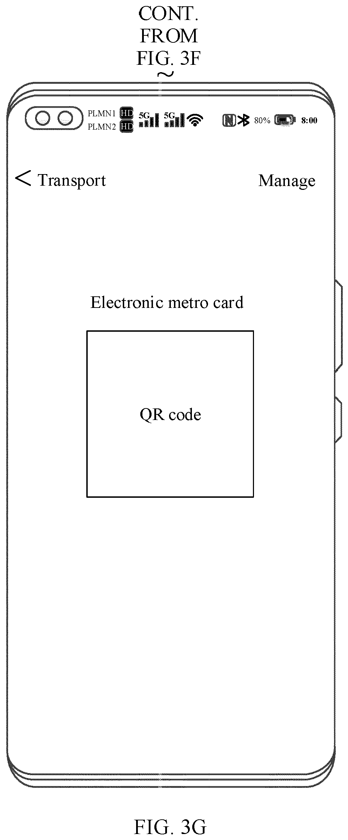

FIG. 3A to FIG. 3G are a schematic diagram of still another scenario according to an embodiment of this application. The scenario is a scenario in which the user needs to first use a WeChat Scan service and then use a Transport service. For an interface shown in FIG. 3A, the interface is a home screen of the mobile phone. The mobile phone receives an operation of tapping a WeChat icon by the user, and displays an interface shown in FIG. 3B. In the interface shown in FIG. 3B, the mobile phone receives an operation of tapping a Scan service control by the user, and displays an interface shown in FIG. 3C. The interface is a WeChat Scan service. In the interface shown in FIG. 3C, the mobile phone receives an operation of exiting the current service by the user, and displays an interface shown in FIG. 3D. In the interface shown in FIG. 3D, the mobile phone receives an operation of exiting the current application by the user, and displays an interface shown in FIG. 3E. The interface is the home screen of the mobile phone. In the interface shown in FIG. 3E, the mobile phone receives an operation of tapping an Alipay icon by the user, and displays an interface shown in FIG. 3F. In the interface shown in FIG. 3F, the mobile phone receives an operation of tapping a Transport service icon by the user, and displays an interface shown in FIG. 3G. The interface is an Alipay Transport service.

In some embodiments, the user may knock the mobile phone or tap a fingerprint key, to evoke, anytime anywhere (for example, when a screen is off, the screen is locked, or an application is in use), a service provided by the application.

However, the evoked service is usually a service (for example, knocking a rear cover of the mobile phone to evoke a health code) or a service icon preset on the terminal device. If the evoked service is not a target service, the user further needs to select the target service (the target service is a service that the user currently needs to use) based on a current requirement. Although the service or the service icon can be quickly evoked in the service evoking manner, the evoked service may not be the target service.

In view of this, embodiments of this application provide a service widget display method, an electronic device, and a storage medium, so that when receiving, in a screen locked state, a state in which an application is running in the foreground, or the like, an operation of invoking a service widget by a user, the terminal device can recommend, based on a current location and/or current time of the terminal device, a service to be used by the user, thereby improving user experience.

For better understanding of embodiments of this application, the following describes a structure of the terminal device in embodiments of this application.

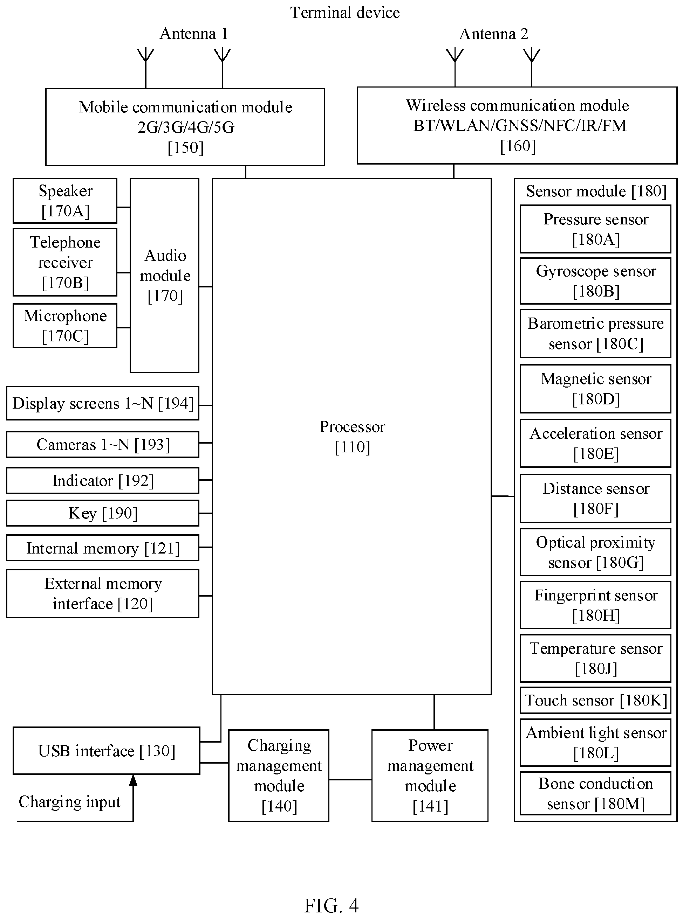

FIG. 4 is a schematic diagram of a structure of a terminal device according to an embodiment of this application. The terminal device may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a telephone receiver 170B, a microphone 170C, a headset jack 170D, a sensor module 180, a key 190, an indicator 192, a camera 193, a display screen 194, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of this application does not constitute a specific limitation on the terminal device. In some other embodiments of this application, the terminal device may include more or fewer components than those shown in the figure, or combine some components, or split some components, or have different component arrangements. The components shown in the figure may be implemented by hardware, software, or a combination of software and hardware.

The processor 110 may include one or more processing units. Different processing units may be independent components, or may be integrated into one or more processors. The processor 110 may be further provided with a memory for storing instructions and data.

The USB interface 130 is an interface that complies with USB standard specifications, and may be specifically a Mini USB interface, a Micro USB interface, a USB Type C interface, or the like. The USB interface 130 may be configured to connect to a charger to charge the terminal device, or may be configured to transmit data between the terminal device and a peripheral device, or may be configured to connect to a headset to play audio through the headset. The interface may alternatively be configured to connect to another electronic device.

The charging management module 140 is configured to receive charging input from a charger. The charger may be a wireless charger, or may be a wired charger. The power management module 141 is configured to connect to the charging management module 140 and the processor 110.

A wireless communication function of the terminal device may be implemented by using the antenna 1, the antenna 2, the mobile communication module 150, the wireless communication module 160, a modem processor, a baseband processor, and the like.

The antenna 1 and the antenna 2 are configured to transmit and receive electromagnetic wave signals. The antenna in the terminal device may be configured to cover one or more communication bands. Different antennas may be further multiplexed to improve antenna utilization.

The mobile communication module 150 may provide a solution that is applied to the terminal device and that includes wireless communication such as 2nd generation wireless technology communication (2th-generation wireless telephone technology, 2G)/a 3rd generation mobile communication technology (3th-generation mobile communication technology, 3G)/a 4th generation mobile communication technology (4th-generation mobile communication technology, 4G)/a 5th generation mobile communication technology (5th-generation mobile communication technology, 5G). The mobile communication module 150 may include at least one filter, switch, power amplifier, low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation.

The wireless communication module 160 may provide a solution that is applied to the terminal device and that includes wireless communication such as a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), or frequency modulation (frequency modulation, FM).

The terminal device implements a display function by using a graphics processing unit (graphics processing unit, GPU), the display screen 194, an application processor, and the like. The GPU is connected to the display screen 194 and the application processor. The GPU is configured to perform mathematical and geometric calculation for graphics rendering.

The display screen 194 is configured to display an image, a video, and the like. The display screen 194 includes a display panel. In some embodiments, the terminal device may include one or N display screens 194, where N is an integer greater than 1.

The terminal device may implement a photographing function by using image signal processor (image signal processing, ISP), the camera 193, a video codec, the GPU, the display screen 194, the application processor, and the like.

The camera 193 is configured to capture a still image or a video. In some embodiments, the terminal device may include one or N cameras 193, where N is an integer greater than 1.

The external memory interface 120 may be configured to connect to an external storage card, to extend a storage capability of the terminal device. The external storage card communicates with the processor 110 through the external memory interface 120, to implement a data storage function. For example, files such as music and a video are stored in the external storage card.

The internal memory 121 may be configured to store computer-executable program code, and the executable program code includes instructions. The internal memory 121 may include a program storage area and a data storage area.

The terminal device may implement an audio function, for example, music playback and recording, by using the audio module 170, the speaker 170A, the telephone receiver 170B, the microphone 170C, the headset jack 170D, the application processor, and the like.

The audio module 170 is configured to convert digital audio information into an analog audio signal for output, and is also configured to convert analog audio input into a digital audio signal. The speaker 170A, also referred to as a "horn", is configured to convert an audio electrical signal into a sound signal. The terminal device may listen to music or answer a call in a hands-free mode by using the speaker 170A. The telephone receiver 170B, also referred to as an "earpiece", is configured to convert an audio electrical signal into a sound signal. When the terminal device receives a call or a voice message, the telephone receiver 170B can be placed close to an ear to receive the voice. The headset jack 170D is configured to connect to a wired headset. The microphone 170C, also referred to as a "mic" or "mike", is configured to convert a sound signal into an electrical signal.

The pressure sensor 180A is configured to sense a pressure signal, and may convert the pressure signal into an electrical signal. In some embodiments, the pressure sensor 180A may be disposed on the display screen 194. The gyroscope sensor 180B may be configured to determine a motion posture of the terminal device. The barometric pressure sensor 180C is configured to measure barometric pressure. The magnetic sensor 180D may include a Hall sensor. The acceleration sensor 180E may detect magnitudes of accelerations in all directions (usually on three axes) of the terminal device. The distance sensor 180F is configured to measure a distance. The optical proximity sensor 180G may include, for example, a light-emitting diode (LED) and an optical detector such as a photodiode. The ambient light sensor 180L is configured to sense luminance of ambient light. The fingerprint sensor 180H is configured to collect a fingerprint. The temperature sensor 180J is configured to detect a temperature. The touch sensor 180K is also referred to as a "touch component". The bone conduction sensor 180M may obtain a vibration signal. In embodiments of this application, a service widget may be invoked in a manner of determining a posture of the terminal device by using a gyroscope, double-tapping the back, or the like.

The touch sensor 180K may be disposed on the display screen 194. The touch sensor 180K and the display screen 194 form a touchscreen, also referred to as a "touch control screen".

The key 190 includes a power key, a volume key, and the like. The key 190 may be a mechanical key, or may be a touch key. The terminal device may receive key input and generate key signal input related to user settings and function control of the terminal device. The indicator 192 may be an indicator light, may be configured to indicate a charging status or a power change, and may be further configured to indicate a message, a missed call, a notification, and the like.

A software system of the terminal device may use a layered architecture, an event-driven architecture, a microkernel architecture, a microservice architecture, a cloud architecture, or the like. Details are not described herein.

The following describes, in detail by using specific embodiments, the technical solutions of this application and how the foregoing technical problems are resolved by using the technical solutions of this application. The following several specific embodiments may be implemented independently, or may be combined with each other. For same or similar concepts or processes, details may not be described again in some embodiments. It should be understood that an interface provided in embodiments of this application is only an example, and does not constitute a further limitation on embodiments of this application.

For example, when a user uses, for the first time, a new terminal device or a terminal device obtained after a system is updated (it should be noted that some functions of the terminal device are unknown to the user in the two scenarios), the terminal device receives a trigger operation of the user, and displays a novice user guide. For example, the user double-taps the back of the mobile phone, touches and holds a volume key, or the like, so that the terminal device displays the novice user guide when displaying a service widget. The novice user guide may include prompt information. The prompt information is used to give a prompt that the service widget intelligently learns a use habit of the user as the user uses the service widget, and performs accurate recommendation. The novice user guide may further include a use learning guide, a manner of guiding the user in learning to use the terminal device, and the like.

It should be understood that the service widget in embodiments of this application may also be referred to as a service page or another name. This is not limited in this application.

For example, the service widget in embodiments of this application may be invoked in any manner shown in the following Table 1.

**Table 1**

| | |
|---|---|
| Physical key | Double-tap a power key |
| | Double-tap a volume up key |
| | Double-tap a volume down key |
| | Volume up key + Volume down key |
| | Power key + Volume up key |
| | Power key + Volume down key |
| | Touch and hold the power key |
| | Touch and hold the volume up key |
| | Touch and hold the volume down key |
| | Newly added physical key |
| Physical accessories | Physical button |
| Physical knocking | Double-tap the back |
| | Double-tap a side edge |
| | Double-tap an upper edge/a lower edge |
| Screen operation | Slide from a side edge of a screen (fixed area) |
| | Side bar |
| | Global operations such as pressing the screen with two fingers |
| Knuckle | Draw a pattern (for example, "C") using the knuckle |

When the user invokes a service widget for the first time, the terminal device may display a recommended service on the service widget based on preset service icons, currently recognized scenarios (for example, different locations), and big data.

The big data may include services used by most users at a current location and/or at current time. Alternatively, a neural network model may be built in the terminal device, and the neural network model may be a model obtained through training by using labeled big data. The terminal device may input a parameter of the currently recognized scenario into the neural network model, to obtain a recommendation result.

In a possible implementation, if an application corresponding to a to-be-recommended service obtained by the terminal device based on big data in a process in which the terminal device recommends a service for the first time is not installed on the terminal device, the terminal device displays, on the service widget based on an order of the preset service icons, a service corresponding to the first service icon that ranks higher.

In different scenarios, services used by the user are different. To further improve experience of using the service widget by the user, in embodiments of this application, intelligent learning may be performed by recording frequency of using various types of services by the user in different scenarios (for example, at different locations) and at different time, so that the terminal device can recommend, based on a use habit (service + time + location) of each user, a service suitable for a current user. In other words, when the user invokes the service widget at different locations and at different time, the terminal device may display, on the service widget based on a habit of the current user, a service commonly used by the user, and may further give a high rank to a service icon corresponding to a service to which the user often switches in the scenario.

With reference to specific scenarios, the following describes in detail a case in which a user invokes a service widget in different scenarios. It should be understood that in embodiments of this application, various service icons may be referred to as service options, service content may be referred to as service information, an area in which the service information (the service content) is displayed on the service widget is referred to as a second area, a service icon display area is referred to as a first area, and a service to which the service information belongs in the service widget is referred to as a target service.

Scenario 1: The user is accustomed to using a WeChat payment service when shopping in a shopping mall.

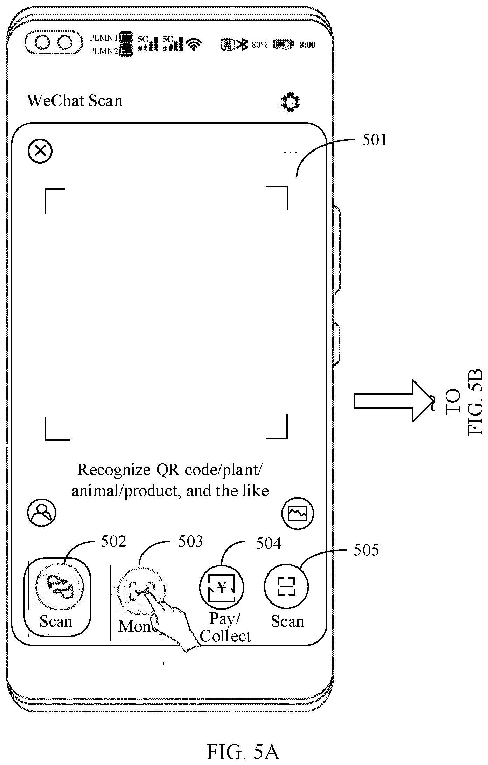

The user invokes a service widget on a terminal device in the shopping mall for the first time, and the terminal device displays an interface shown in FIG. 5A. The interface includes a service widget, and the service widget includes a WeChat Scan service 501 (service information), a WeChat Scan icon 502, a WeChat Money icon 503, an Alipay Pay/Collect icon 504, and an Alipay Scan icon 505. A current display interface of the terminal device is not the WeChat payment service expected by the user. Therefore, the user needs to switch a current service to the WeChat payment service.

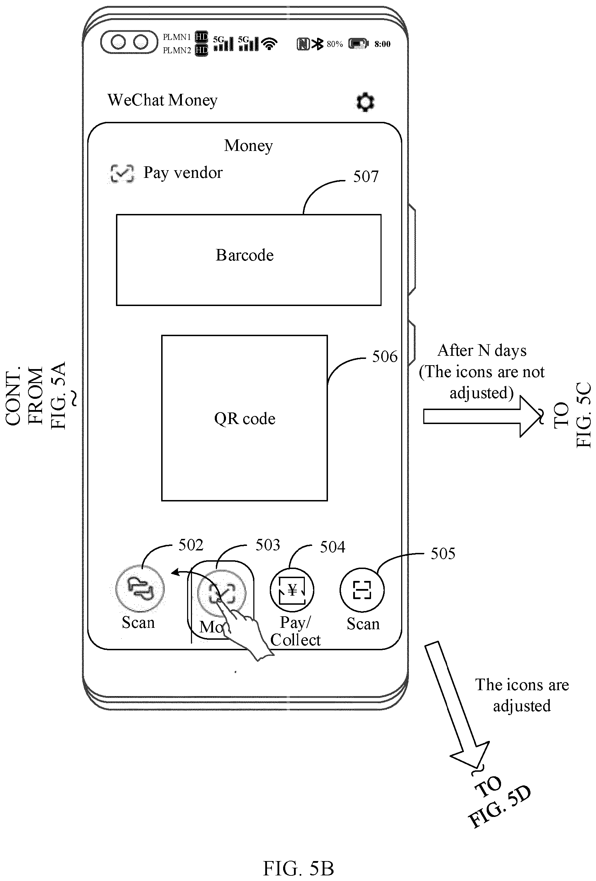

In a possible implementation, in the interface shown in FIG. 5A, the terminal device displays an interface shown in FIG. 5B in response to a service switching operation of the user (for example, the user may tap the WeChat Money icon 503). The interface includes a service widget, and the service widget includes a WeChat payment QR code 506, a WeChat payment barcode 507, the WeChat Scan icon 502, the WeChat Money icon 503, the Alipay Pay/Collect icon 504, and the Alipay Scan icon 505. In other words, the terminal device switches a service in the service widget from the WeChat Scan service to the WeChat payment service (namely, the WeChat payment QR code and the WeChat payment barcode) in response to the service switching operation of the user.

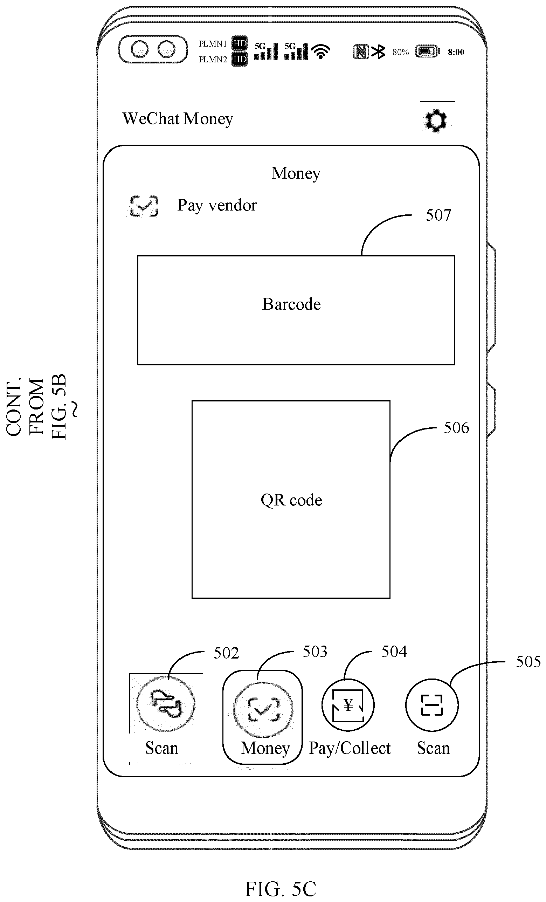

When the user re-invokes the service widget in the shopping mall after the user uses, for a period of time (N days) in the shopping mall, the WeChat payment service provided by the service widget, an interface shown in FIG. 5C is displayed. The interface includes a service widget (which may be a first service widget or a second service widget). The service widget includes the WeChat payment QR code 506, the WeChat payment barcode 507 (service information), the WeChat Scan icon 502, the WeChat Money icon 503, the Alipay Pay/Collect icon 504, and the Alipay Scan icon 505.

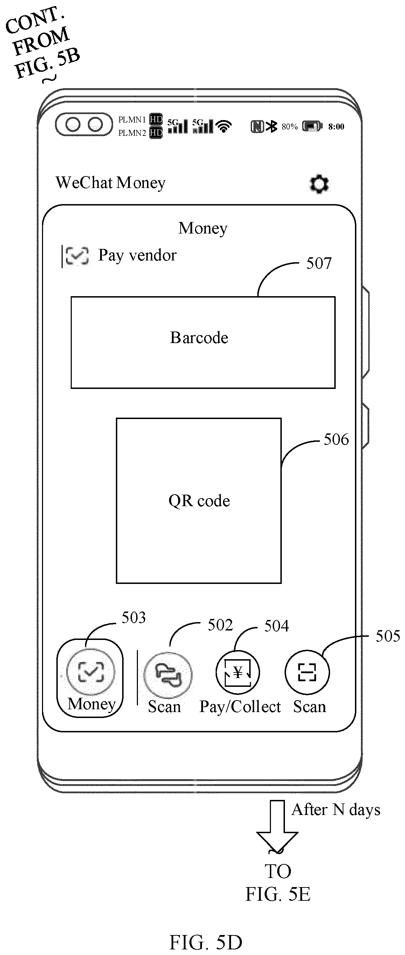

In another possible implementation, to easily use a service provided by the WeChat Money icon 503, the user may continue to adjust a location of the WeChat Money icon after service switching. For example, in the interface shown in FIG. 5B, the terminal device receives an operation of adjusting a service icon by the user (for example, the user may touch and hold the WeChat Money icon 503, and move the icon 503 to a leftmost location of an icon display area), and displays an interface shown in FIG. 5D. The interface includes a service widget, and the service widget includes the WeChat payment QR code 506, the WeChat payment barcode 507, the WeChat Scan icon 502, the WeChat Money icon 503, the Alipay Pay/Collect icon 504, and the Alipay Scan icon 505. When the user re-invokes the service widget next time within a range in which a same geo-fence is located, or when the user re-invokes the service widget after using the service widget for a period of time, the terminal device may directly display the interface shown in FIG. 5D.

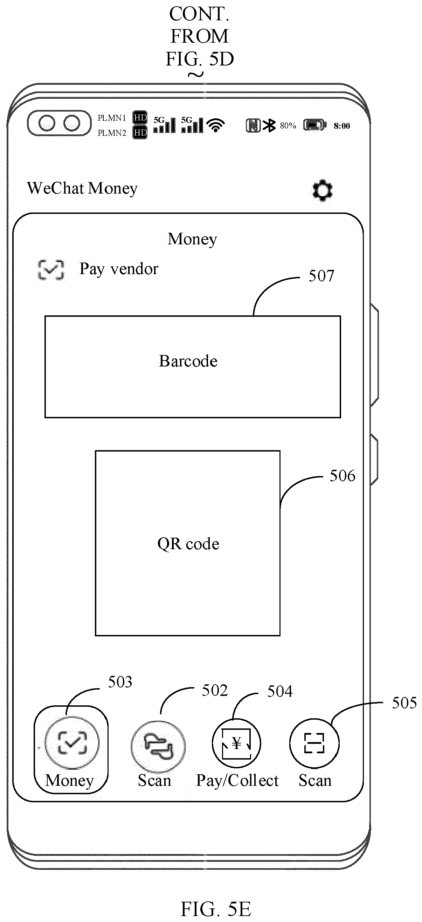

With reference to the foregoing example (the example of switching from FIG. 5B to FIG. 5D), when the user re-invokes the service widget in the shopping mall after the user uses, for a period of time (N days) in the shopping mall, the WeChat payment service provided by the service widget, an interface shown in FIG. 5E is displayed. The interface includes a service widget, and the service widget includes the WeChat payment QR code 506, the WeChat payment barcode 507, the WeChat Money icon 503, the WeChat Scan icon 502, the Alipay Pay/Collect icon 504, and the Alipay Scan icon 505. Compared with the interface shown in FIG. 5C, an order of the service icons displayed on the service widget changes, and the WeChat Money service icon is arranged on the leftmost side.

It should be understood that after the user uses the service widget for a period of time, the terminal device has learned a use habit that a service commonly used by the user in the shopping mall is the WeChat payment service. Then, when the terminal device receives, in this scenario again, an operation of invoking the service widget, the terminal device may intelligently recommend, based on a current location of the terminal device, a service most frequently used by the user.

Scenario 2: The user uses a metro code to take a metro at a metro station.

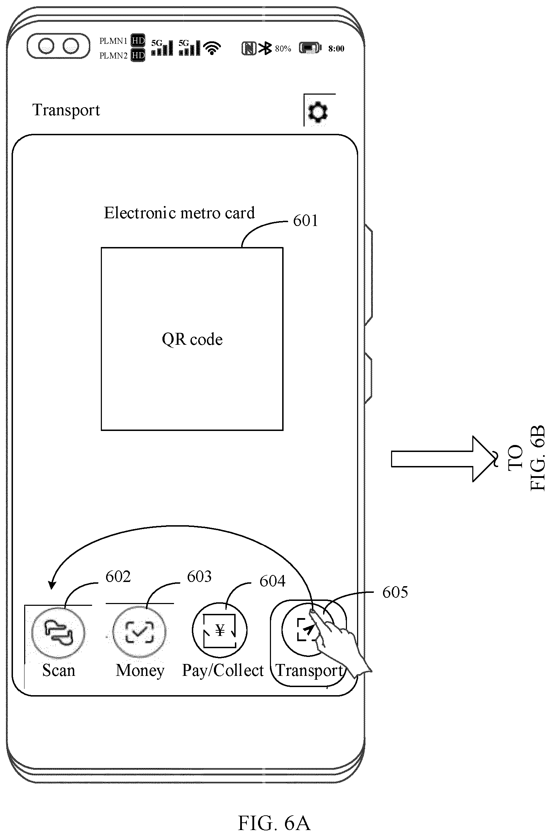

When the user invokes a service widget near the metro station for the first time, a terminal device displays an interface shown in FIG. 6A. The interface includes a service widget, and the service widget includes a QR code 601 of an electronic metro card, a WeChat Scan icon 602, a WeChat Money icon 603, an Alipay Pay/Collect icon 604, and a Transport service icon 605 corresponding to the electronic metro card. A service displayed in a current display interface of the terminal device is a service expected by the user. Therefore, the user does not need to switch the current service again.

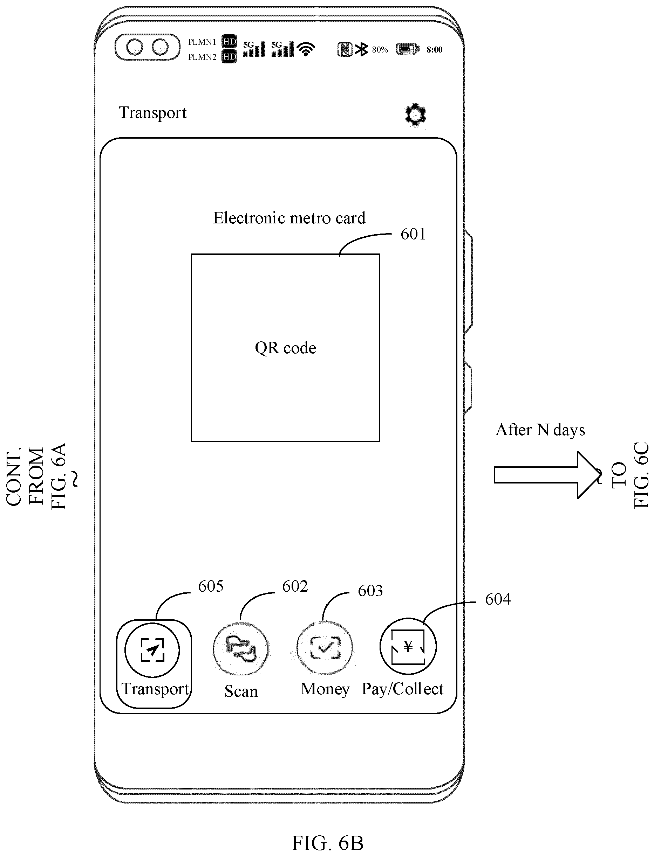

Optionally, to easily use a service provided by the Transport service icon 605, the user may move the Transport service icon 605 to a leftmost location of a service icon display area. For example, the user may touch and hold the Transport service icon 605, and move the Transport service icon 605 to the leftmost location, namely, a location of the WeChat Scan icon 602. Correspondingly, other icons are sequentially moved rightward. To be specific, the WeChat Scan icon 602 is moved to a location of the WeChat Money icon 603, the WeChat Money icon 603 is moved to a location of the Alipay Pay/Collect icon 604, and the Alipay Pay/Collect icon 604 is moved to a location of the Transport service icon 605. For a display order of the service icons after the moving, refer to locations of the service icons in an interface shown in FIG. 6B.

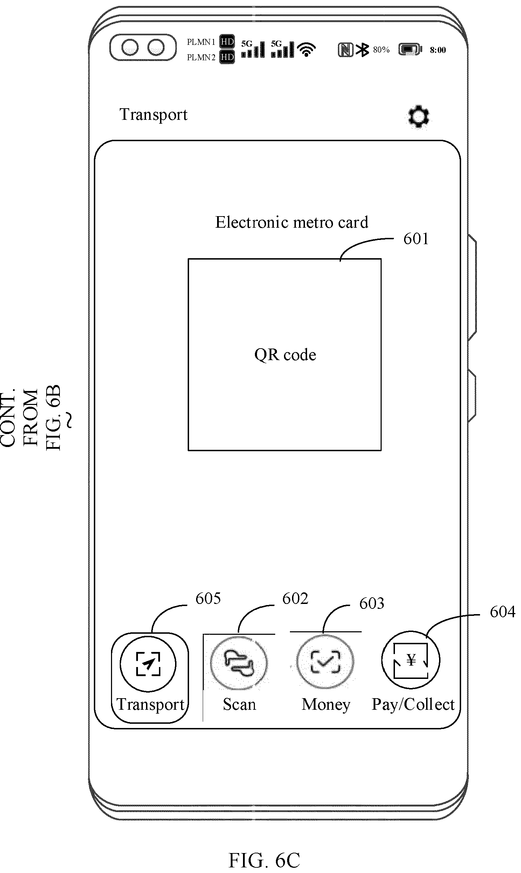

In a possible implementation, the user adjusts the location of the Transport service icon (for example, in the interface shown in FIG. 6B). When the user re-invokes the service widget at the metro station after the user uses the service widget near the metro station for a period of times (N days), an interface shown in FIG. 6C is displayed. The interface includes a service widget (which may be a first service widget or a second service widget). The service widget includes the QR code 601 of the electronic metro card, the Transport service icon 605 corresponding to the electronic metro card, the WeChat Scan icon 602, the WeChat Money icon 603, and the Alipay Pay/Collect icon 604. Compared with the interface shown in FIG. 6A, an order of the service icons displayed on the service widget changes.

In another possible implementation, the user does not adjust the location of the Transport service icon (for example, in the interface shown in FIG. 6A). When the user re-invokes the service widget at the metro station after the user uses the service widget near the metro station for a period of time (N days), the interface shown in FIG. 6A is still displayed.

It can be learned from Scenario 1 and Scenario 2 that before use habit data of the user is not obtained, the electronic device may recommend a service to the user based on big data. For example, when the service widget is used at the metro station for the first time, a metro QR code is displayed, so that the user can travel. When the service widget is used in the shopping mall for the first time, a code scanning service interface is displayed, so that the user can scan a code for payment.

Scenario 3: The user uses an Alipay Scan service to pay for breakfast near home in the morning, and uses a WeChat Scan service near home in the afternoon to scan a health code and present a health status.
1. The user invokes a service widget on a terminal device near home in the morning (for example, during working hours).

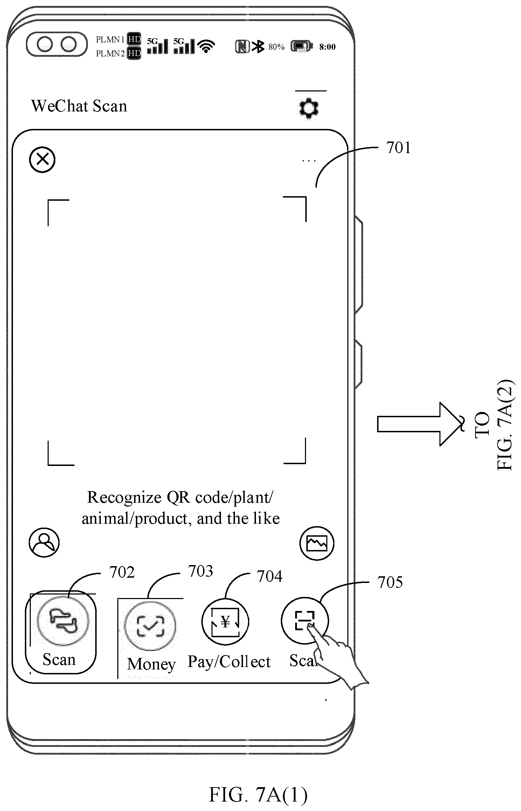

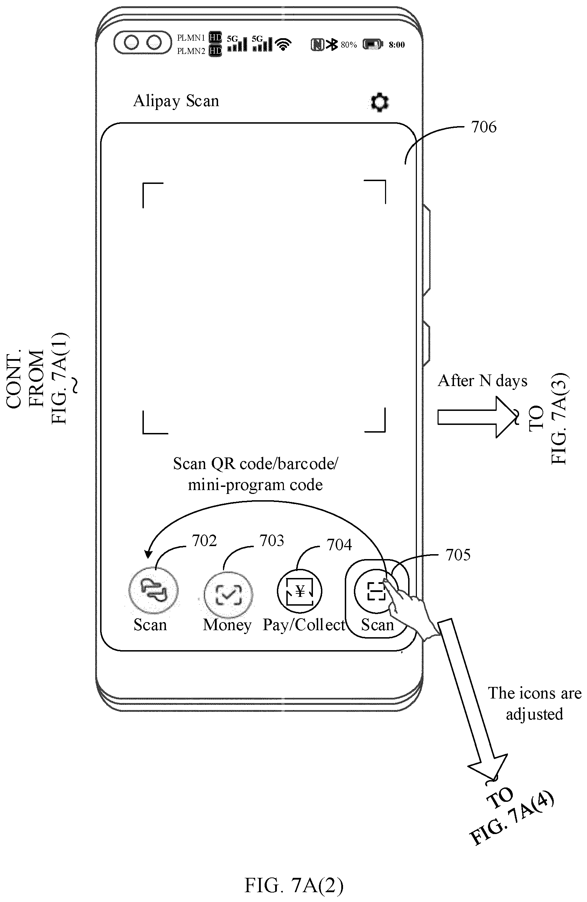

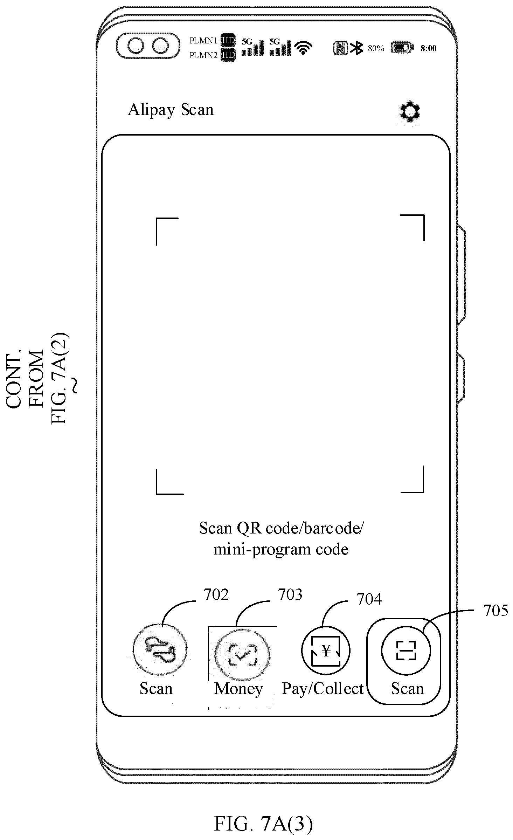

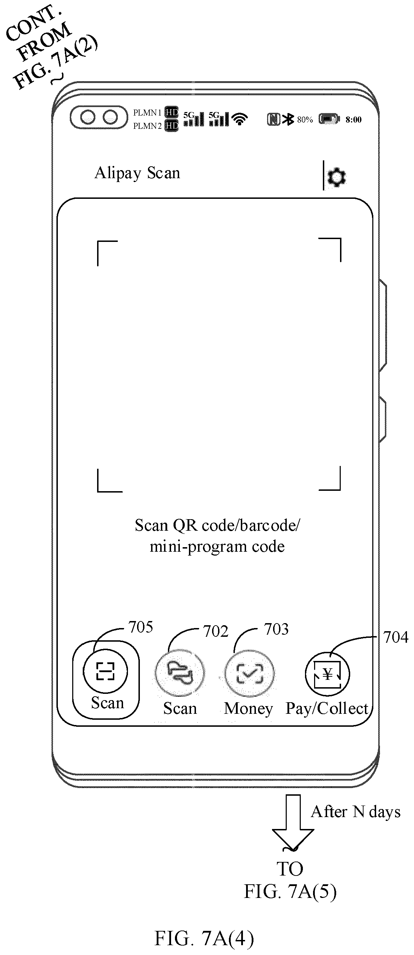

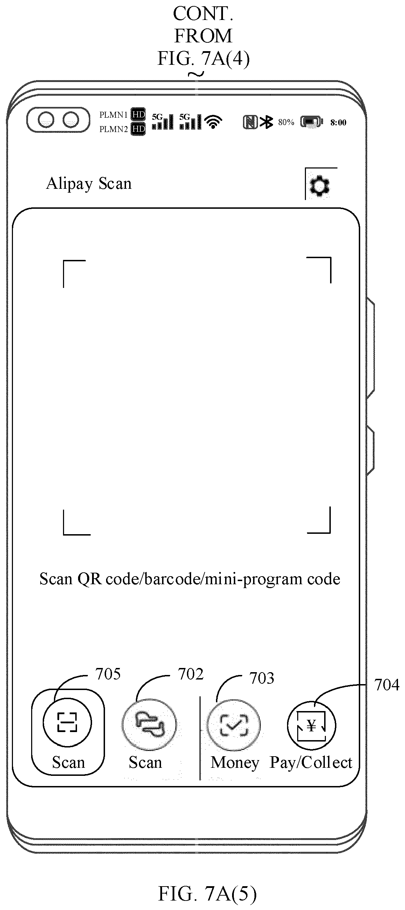

The terminal device displays an interface shown in FIG. 7A(1) in response to an operation of invoking the service widget by the user for the first time. The interface includes a service widget, and the service widget includes a WeChat Scan service 701, a WeChat Scan icon 702, a WeChat Money icon 703, an Alipay Pay/Collect icon 704, and an Alipay Scan icon 705. A current display interface of the terminal device is not the Alipay Scan service expected by the user. Therefore, the user needs to switch a current service to the Alipay Scan service.

In a possible implementation, in the interface shown in FIG. 7A(1), the terminal device displays an interface shown in FIG. 7A(2) in response to a service switching operation of the user (for example, the user may tap the Alipay Scan icon 705). The interface includes a service widget, and the service widget includes Alipay Scan 706, the WeChat Scan icon 702, the WeChat Money icon 703, the Alipay Pay/Collect icon 704, and the Alipay Scan icon 705.

When the user re-invokes the service widget near home in the morning after the user uses, for a period of time (N days) near home in the morning, the Alipay Scan service provided by the service widget, an interface shown in FIG. 7A(3) is displayed. The interface includes a service widget, and the service widget includes Alipay Scan 706, the WeChat Scan icon 702, the WeChat Money icon 703, the Alipay Pay/Collect icon 704, and the Alipay Scan icon 705.

In another possible implementation, to easily use a service provided by the Alipay Scan icon 705, the user may continue to adjust a location of the Alipay Scan icon after service switching.

For example, in the interface shown in FIG. 7A(2), the terminal device receives an operation of adjusting a service icon by the user (for example, the user may touch and hold the Alipay Scan icon 705, and move the icon 705 to a leftmost location of an icon display area), and displays an interface shown in FIG. 7A(4). The interface includes a service widget, and the service widget includes Alipay Scan 706, the Alipay Scan icon 705, the WeChat Scan icon 702, the WeChat Money icon 703, and the Alipay Pay/Collect icon 704.

With reference to the foregoing example, when the user re-invokes the service widget near home in the morning after the user uses, for a period of time (N days) near home in the morning, the WeChat payment service provided by the service widget, an interface shown in FIG. 7A(5) is displayed. The interface includes a service widget (which may be a first service widget or a second service widget). The service widget includes Alipay Scan 706, the Alipay Scan icon 705, the WeChat Money icon 703, the WeChat Scan icon 702, and the Alipay Pay/Collect icon 704. Compared with the interface shown in FIG. 7A(3), an order of the service icons displayed on the service widget changes.

2. The user invokes a service widget on a terminal device near home in the afternoon (for example, during off-duty time).

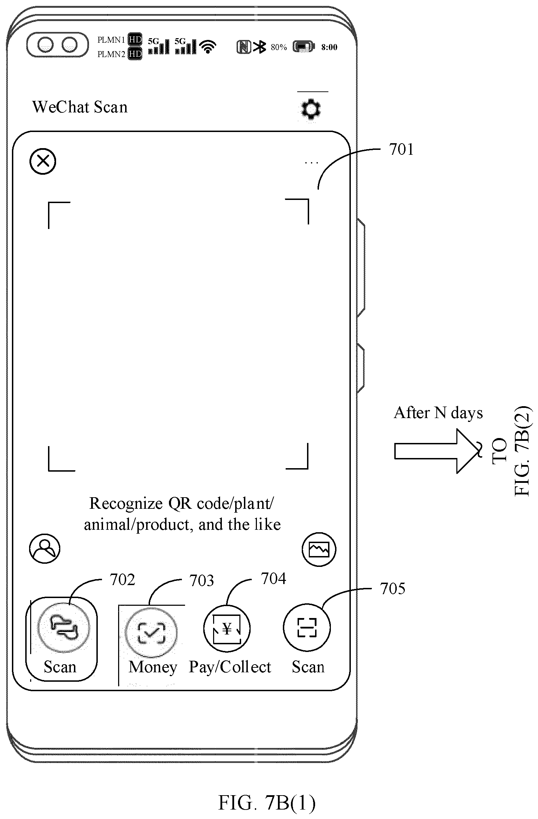

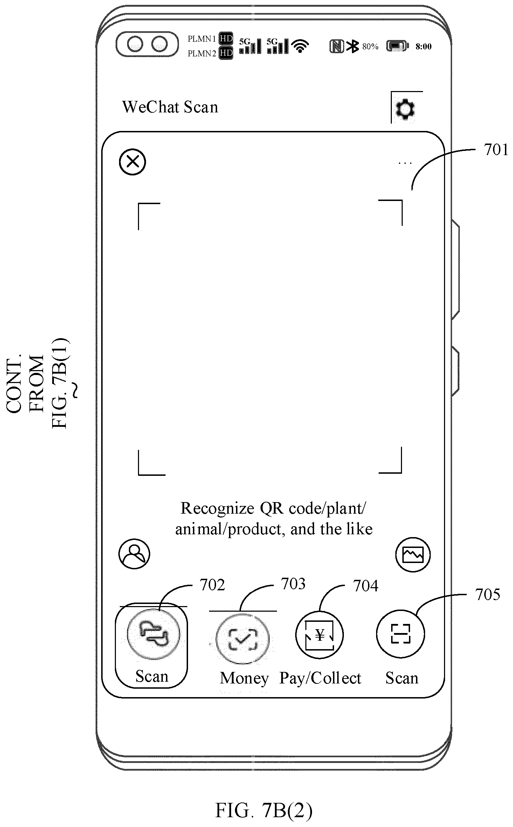

The terminal device displays an interface shown in FIG. 7B(1) in response to an operation of invoking the service widget by the user for the first time. The interface includes a service widget, and the service widget includes a WeChat Scan service 701, a WeChat Scan icon 702, a WeChat Money icon 703, an Alipay Pay/Collect icon 704, and an Alipay Scan icon 705. A service displayed in a current display interface of the terminal device is a service expected by the user. Therefore, the user does not need to switch the current service again.

In the interface shown in FIG. 7B(1), the WeChat Scan icon 702 is located at a leftmost location of a service icon display area on the service widget. Optionally, the user may move, based on a use habit of the user, the WeChat Scan icon 702 to another location in the service icon display area, for example, to the rightmost side of the service icon display area. For a specific manner of adjusting the service icon, refer to related descriptions of adjusting the Transport icon in Scenario 2. Details are not described herein again.

If the user does not adjust a location of the service icon, when the user re-invokes the service widget near home in the afternoon after the user uses, for a period of time (N days) near home in the afternoon, the WeChat Scan service provided by the service widget, an interface shown in FIG. 7B(2) is displayed. The interface is the same as the interface shown in FIG. 7B(1).

Optionally, when performing intelligent recommendation, the terminal device may display, on the service widget based on a current location and current time of the current terminal device, service content most frequently used by the user, without adjusting service icons on the service widget; or display, on the service widget, service content most frequently used by the user, while adjusting service icons on the service widget, to be specific, sequentially displaying corresponding service icons on the service widget in descending order of frequency of using various services by the user in the scenario. For example, if the user often switches between a health code and a metro code at a metro station, a Transport icon and a health code icon rank higher.

It should be noted that after learning a habit of using the service widget by the user, the terminal device may continue to learn the habit of using the service widget by the user, to continuously update a service recommended to the user at a same location and/or at same time. For example, the user is accustomed to using the Alipay Scan service for a period of time near home in the morning. When the user re-invokes the service widget after use of a period of time after the terminal device learns the habit of the user, displayed service content is the Alipay Scan service. However, after a period of time after the terminal device learns the use habit, the user often switches the Alipay Scan service to the WeChat Scan service. In this case, the terminal device continues to learn a habit of using WeChat Scan by the user, so that when the user re-invokes the service widget near home in the morning after a period of time, service content displayed on the service widget changes from Alipay Scan to WeChat Scan.

It should be noted that a service included in a service widget displayed for the first time, a type of a service icon, a quantity of service icons, and an order of service icons from left to right may be preset on the terminal device by a developer.

For example, the terminal device may record a geo-fence, time, and/or the like, and one or more services often used by the user in the geo-fence and/or at the time (for example, a service switching operation may be recorded, and a service displayed for five seconds or more is recorded), to implement intelligent recommendation for the user, make the service widget more personalized, and further improve user experience.

Based on this, when a service widget is invoked, the terminal device may intelligently recommend and display, based on a use habit of the user, current time, and a current location of a current terminal device, a service and a service icon that the user needs to use, so that the service widget is more personalized, and the user does not need to switch to a target service for a plurality of times after the service widget is invoked, thereby improving user experience.

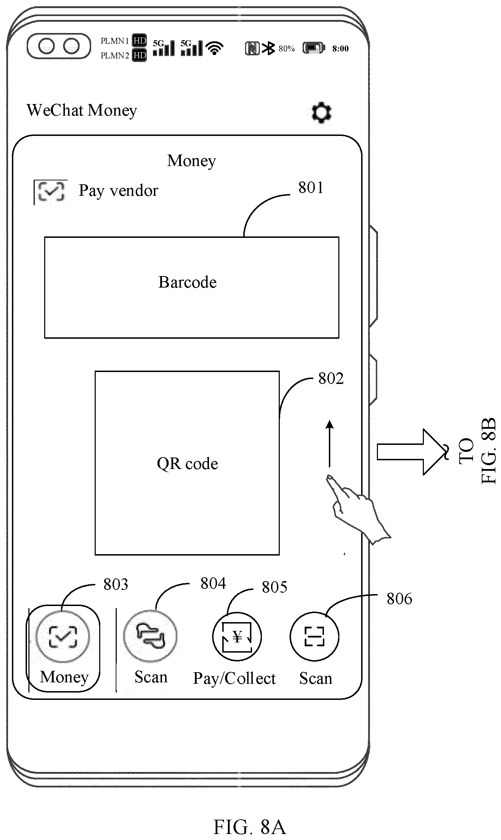

The following describes in detail a service widget switching manner provided in embodiments of this application with reference to FIG. 8A to FIG. 8E. For ease of description, in embodiments of this application, an operation of invoking the service widget by the user is described as a first operation.

FIG. 8A to FIG. 8E are a schematic diagram of an interface of switching a service widget according to an embodiment of this application. As shown in FIG. 8A, the interface is a service widget displayed by a terminal device in response to a first operation of a user. The service widget may include a WeChat payment barcode 801, a WeChat payment QR code 802, a WeChat Money icon 803, a WeChat Scan icon 804, an Alipay Pay/Collect icon 805, and an Alipay Scan icon 806. The WeChat payment barcode and the WeChat payment QR code belong to a WeChat Money service, in other words, a WeChat payment service is a sub-service of the WeChat Money service, and the WeChat Money service further includes a plurality of other sub-services such as Balance 807, Receive Money 808, Reward Code 809, Split Bill 810, Packets Nearby 811, and Transfer to Bank Card/Mobile No. 812. In this case, a service provided by the service widget shown in FIG. 8A is the WeChat payment service.

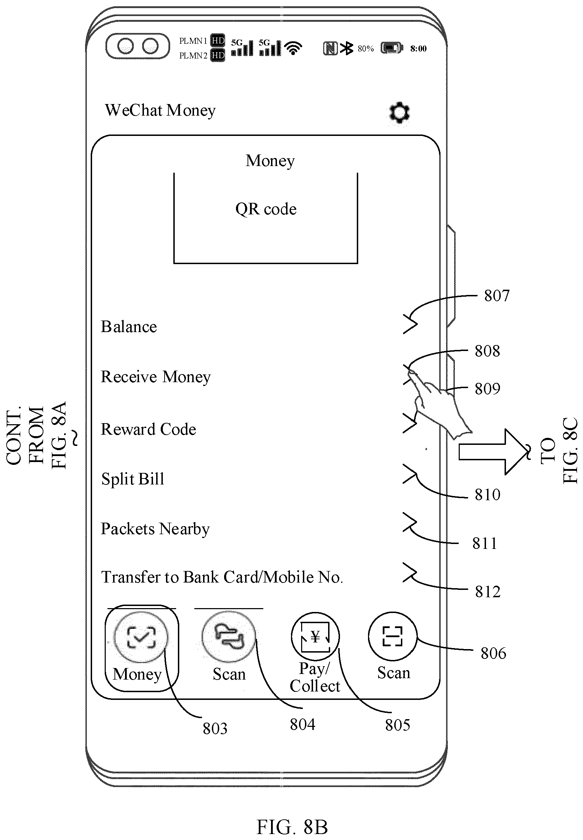

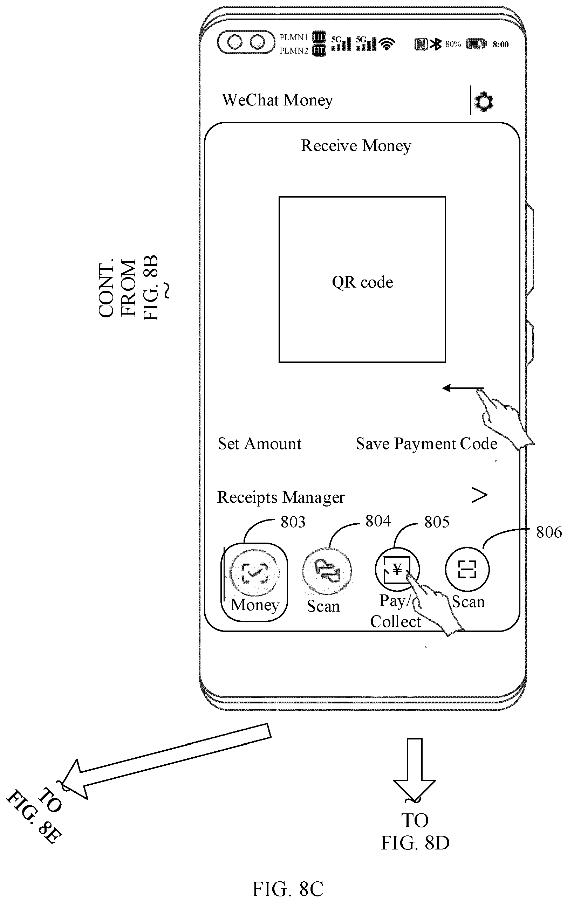

In the interface shown in FIG. 8A, the terminal device displays an interface shown in FIG. 8B in response to an operation of sliding the service widget up by the user. The interface includes the other sub-services such as Balance 807, Receive Money 808, Reward Code 809, Split Bill 810, Packets Nearby 811, and Transfer to Bank Card/Mobile No. 812. In the interface shown in FIG. 8B, the terminal device displays an interface shown in FIG. 8C in response to an operation of tapping a Receive Money control by the user. The interface includes a WeChat collection QR code. It should be understood that a sub-service recommended by the terminal device may also change based on a use habit of the user. In other words, the terminal device may recommend, based on a current location and/or current time, a service that the user expects to use. The service may be any sub-service included in a service corresponding to any service icon.

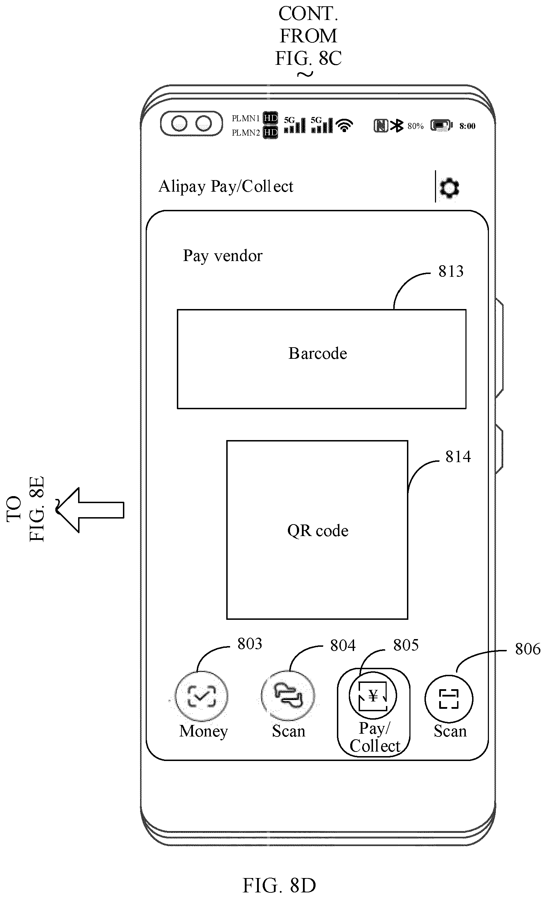

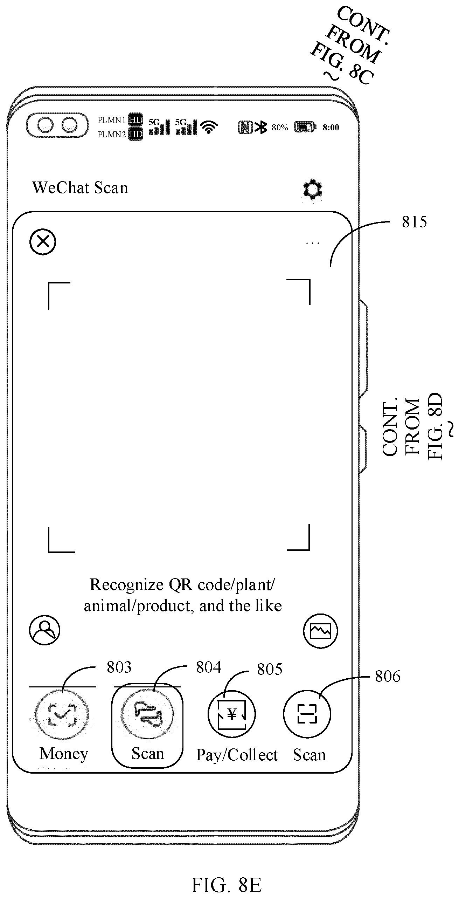

In the interface shown in FIG. 8C, the terminal device displays an interface shown in FIG. 8D in response to an operation of tapping the Alipay Pay/Collect icon 805 by the user. The interface includes an Alipay payment QR code 813, an Alipay payment barcode 814, the WeChat Scan icon 804, the Alipay Pay/Collect icon 805, and the Alipay Scan icon 806. Alternatively, in the interface shown in FIG. 8C, the terminal device displays an interface shown in FIG. 8E in response to an operation of sliding the service left by the user. The interface includes a WeChat Scan service 815, the WeChat Money icon 803, the WeChat Scan icon 804, the Alipay Pay/Collect icon 805, and the Alipay Scan icon 806.

Optionally, the foregoing service switching operation may be performed through shaking.

It should be understood that after the foregoing leftward/rightward service sliding, a service displayed on the service widget may be a service corresponding to a service icon included in a current service widget, or may not be a service corresponding to a service icon included in a current service widget. For example, in the interface shown in FIG. 8E, a service displayed on the service widget is the WeChat Scan service. In this case, the service widget includes the icon 804 corresponding to the WeChat Scan service. It should be understood that the service displayed on the service widget is the WeChat Scan service, but the icon 804 corresponding to the WeChat Scan service may not be displayed on the service widget.

Optionally, the service widget may include one or more services. For example, a service is displayed on a bar-type mobile phone, and a plurality of services may be displayed in parallel on a foldable screen in an unfolded state or a slate. A quantity of service pages displayed on the service widget is not limited in this embodiment of this application.

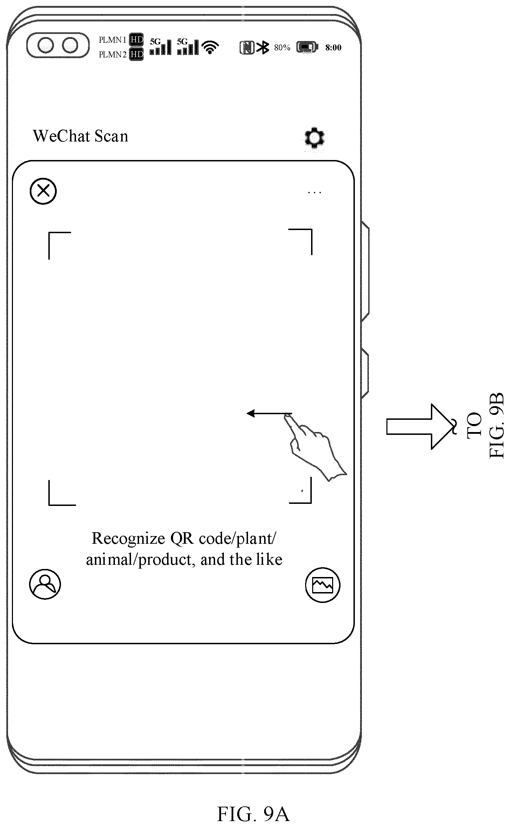

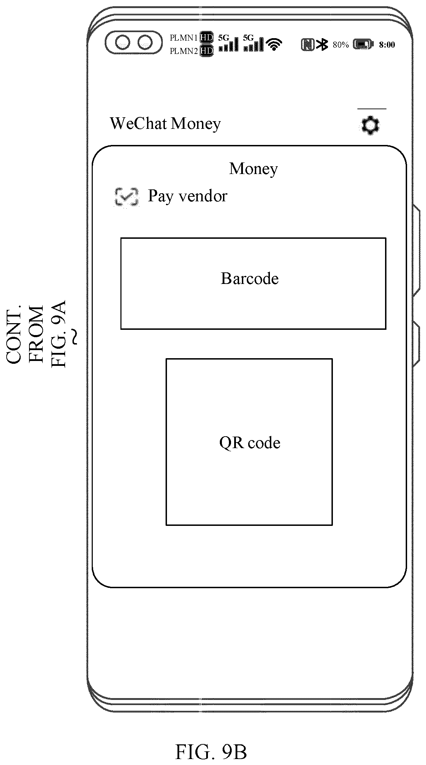

Optionally, the service widget may include only various services, and does not include a service icon. It should be understood that when the service widget does not include a service icon, the terminal device may display another service in response to a manner in which the user slides a current service left/right. For example, refer to FIG. 9A and FIG. 9B. As shown in FIG. 9A, the interface is a display form of a service widget. The service widget displays the WeChat Scan service, but does not include a service icon. In the interface shown in FIG. 9A, an interface shown in FIG. 9B is displayed in response to a leftward sliding operation of the user. The interface is an interface displayed after switching to another service (the WeChat Money service) is performed. It should be noted that when the user exits the service widget for the first time and returns to the home screen or unlocks the terminal device next time, the user may be notified of a function of the newly added service widget of the terminal device by using a banner, or may be reminded of a function of the newly added service widget of the terminal device in another manner. Optionally, the user may be reminded of the function of the newly added service widget twice or three times, and specific reminding time may be after the function is used for the first time, after seven days after the function is used, after 14 days after the function is used, or the like. This manner can avoid a problem that after the user exits the service widget, because the user forgets the function of the newly added service widget of the terminal device, the user continues to invoke a service in an existing manner when invoking the service widget next time.

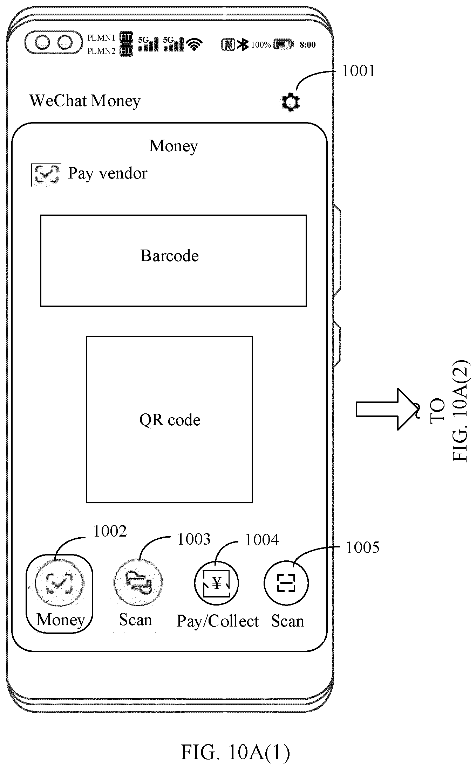

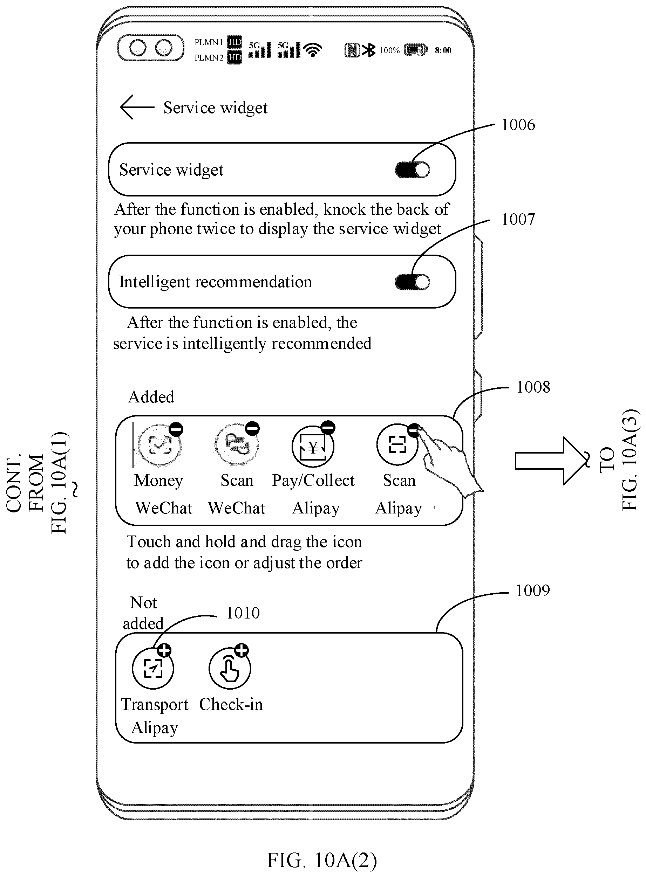

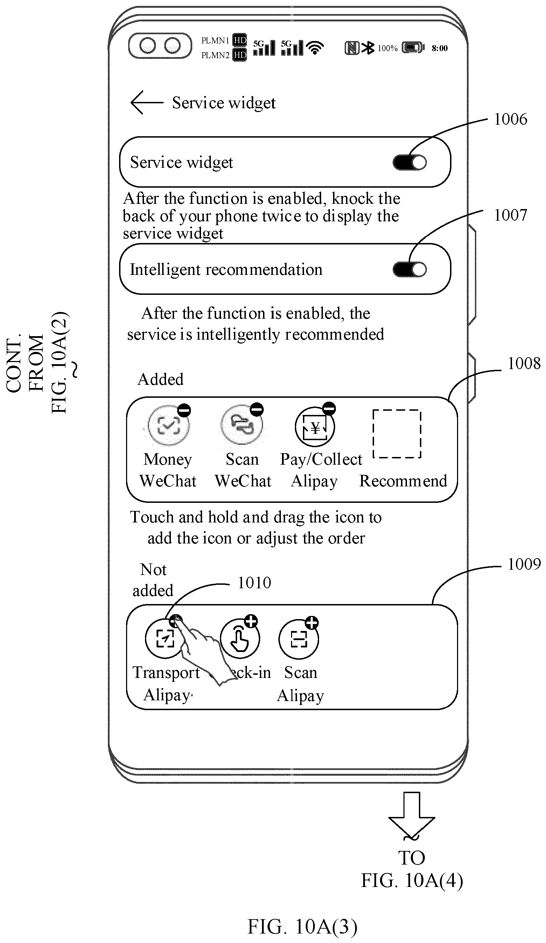

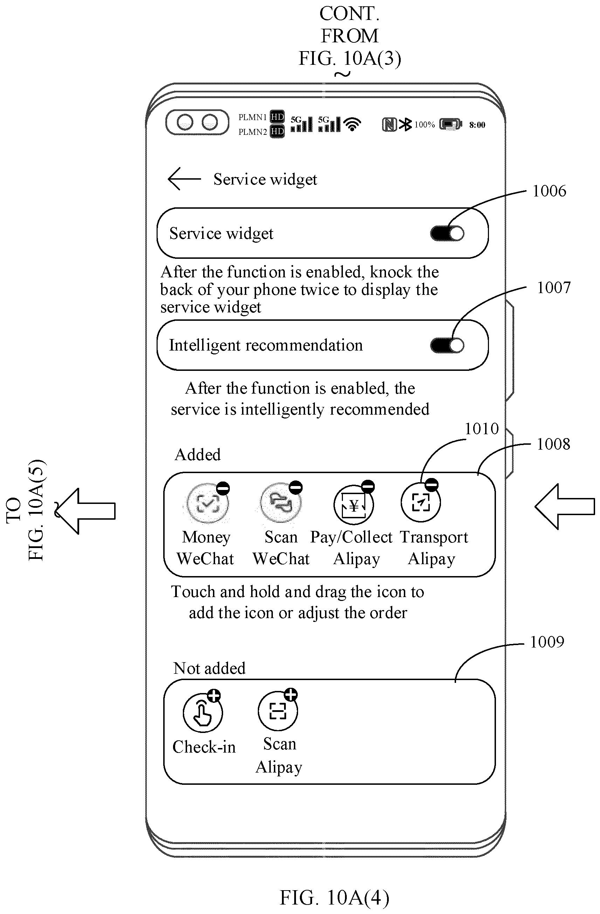

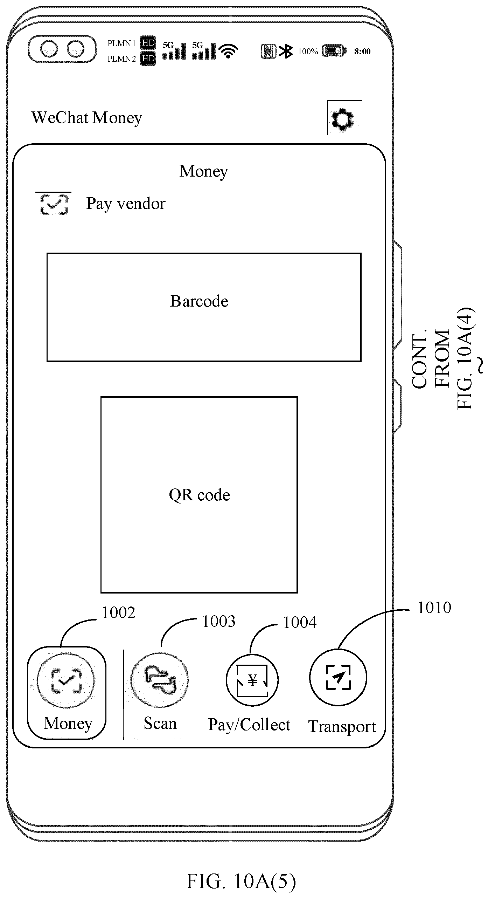

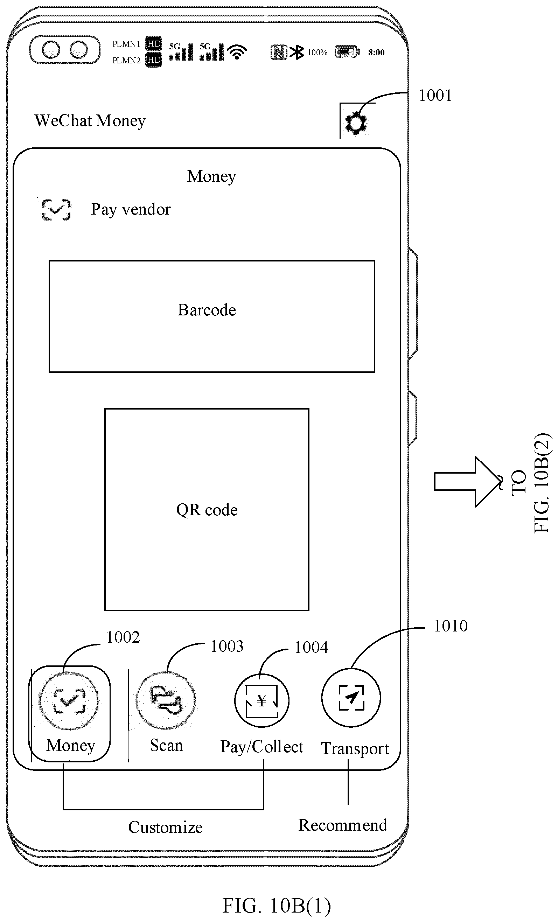

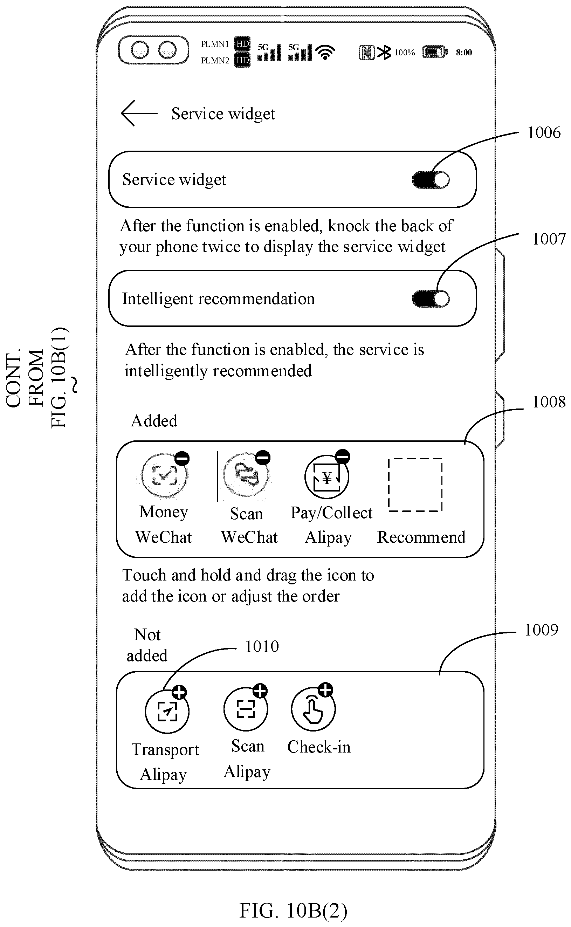

It should be noted that service icons included in the service widgets shown in FIG. 5A to FIG. 9B may be all recommended by the terminal device, or partially recommended by the terminal device and partially added by the user through customization. The following describes a service icon custom-adding process in detail with reference to FIG. 10A(1) to FIG. 10B(2).

FIG. 10A(1) to FIG. 10A(5) are a schematic diagram of an interface of a service icon custom-adding process according to an embodiment of this application. An interface shown in FIG. 10A(1) includes a setting icon 1001 and a service widget. The service widget includes a WeChat payment QR code and payment barcode, a WeChat Money icon 1002, a WeChat Scan icon 1003, an Alipay Pay/Collect icon 1004, and an Alipay Scan icon 1005. It should be understood that all service icons included in the service widget shown in FIG. 10A(1) are added by the user through customization. In the interface shown in FIG. 10A(1), the terminal device displays an interface shown in FIG. 10A(2) in response to an operation performed by the user on the setting icon 1001. The interface is a service widget setting interface. The interface includes an enable/disable control 1006 for "enabling/disabling" the service widget, an enable/disable control 1007 for "enabling/disabling" intelligent recommendation, an "Added" area 1008 (the area includes an added service icon, and each service icon has a "-" control), and a "Not added" area 1009 (the area includes a service icon that is not added, and each service icon has a "+" control). The interface further includes an introduction and an operation manner of a related function. For example, for a service widget function, "After the function is enabled, knock the back of your phone twice to display the service widget" is displayed below an enable/disable control corresponding to the function. For an intelligent recommendation function, "After the function is enabled, the service is intelligently recommended" is displayed below an enable/disable control corresponding to the function, and "Touch and hold and drag the icon to add the icon or adjust the order" is displayed below the "Added" area 1008.

The user may select, in the "Not added" area 1009, one or more services that need to be added to the "Added" area 1008. Alternatively, the user may remove one or more services in the "Added" area 1008 to the "Not added" area 1009. Alternatively, the user may touch and hold and drag a service icon that needs to be moved to perform a custom adjustment to an order of the service icons in the "Added" area 1008.

It should be understood that the interface shown in FIG. 10A(2) may alternatively be entered from a Settings application. The process may include: Settings-Accessibility features-Shortcuts & gestures-Shortcuts widget-Display service widgets. It should be noted that the process is merely an example of embodiments of this application, and another manner that is defined in the future or in another terminal device and that is used to set a service widget setting interface falls within the protection scope of embodiments of this application.

It should be further understood that the foregoing service adding operation may be that the user taps a "+" control on a service icon, or the user touches and holds the service icon and drags the service icon to the "Added" area 1008. The foregoing removal operation may be that the user taps a "-" control on a service icon, or the user touches and holds the service icon and drags the service icon to the "Not added" area 1009.

For example, in the interface shown in FIG. 10A(2), the terminal device displays an interface shown in FIG. 10A(3) in response to an operation of tapping a "-" control on the Alipay Scan service icon by the user. An "Added" area 1008 of the interface does not include the Alipay Scan service icon. In the interface shown in FIG. 10A(3), the terminal device displays an interface shown in FIG. 10A(4) in response to an operation of tapping a "+" control on a Transport service icon 1010 by the user. An "Added" area 1008 of the interface includes the Transport service icon 1010. In this case, the terminal device displays an interface shown in FIG. 10A(5) when responding to an operation of invoking the service widget by the user. A service widget displayed in the interface includes the Transport service icon 1010, and does not include the Alipay Scan service icon.

It should be understood that the user may not add any service icon to the "Added" area 1008. In this setting, all service icons included in an invoked service widget are service icons recommended by the terminal device. Alternatively, the user may add one to three service icons to the "Added" area 1008. If four service icons are displayed on a service widget preset in the terminal device, in this setting, one of service icons included in an invoked service widget is a service icon recommended by the terminal device.

FIG. 10B(1) and FIG. 10B(2) are a schematic diagram of an interface of another service icon custom-adding process according to an embodiment of this application. In four service icons included in an interface shown in FIG. 10B(1), three service icons named the WeChat Money icon 1002, the WeChat Scan icon 1003, and the Alipay Pay/Collect icon 1004 are service icons customized by the user, and the Transport service icon 1010 is a service icon recommended by the terminal device. In an interface shown in FIG. 10B(1), the terminal device receives the operation of tapping the setting icon 1001 by the user, and displays an interface shown in FIG. 10B(2). The interface is a service widget setting interface. For related descriptions of the interface, refer to related descriptions in FIG. 10A(1) to FIG. 10A(5). Details are not described herein again.

In the interface shown in FIG. 10B(2), the "Added" area 1008 includes the three service icons customized by the user, and the "Not added" area 1009 includes the Transport service icon recommended by the terminal device. It should be understood that the service recommended by the terminal device may be recommended based on a current location and/or current time of the terminal device.

It should be noted that the service icons displayed in the "Added" area 1008 are the service icons customized by the user, and a display order of the service icons displayed in the area 1008 is a display order of service icons in a corresponding service widget in this setting. In other words, when the terminal device receives, in any scenario and at any time, an operation of invoking the service widget by the user, a service icon that is in service icons included in the service widget and that is customized by the user usually does not change with a scenario and time.

Optionally, when applications installed on the terminal device provide a relatively large quantity of service types, service icons in the "Not added" area on the service widget setting interface may be classified and deployed based on an application type or a service type or in another manner. This is not limited in this application.

Optionally, the "Not added" area on the service widget setting interface may be customized. It should be understood that the customization manner may be used by the user to add an operation or add a result display page. For example, an on/off key is used to turn on/off a TV. To be specific, the user returns to the home, and turns on the television by using the terminal device. In this case, the terminal device receives an operation of invoking a service widget by the user, and displays the on/off key, and the user turns on the TV by using the key.

It should be understood that the service icons included in the service widget setting interface of the terminal device may be updated based on a service included in an application preinstalled on the terminal device. For example, WeChat or Alipay is uninstalled on the terminal device, and correspondingly, service icons corresponding to services provided by WeChat and Alipay on the setting interface are also deleted.

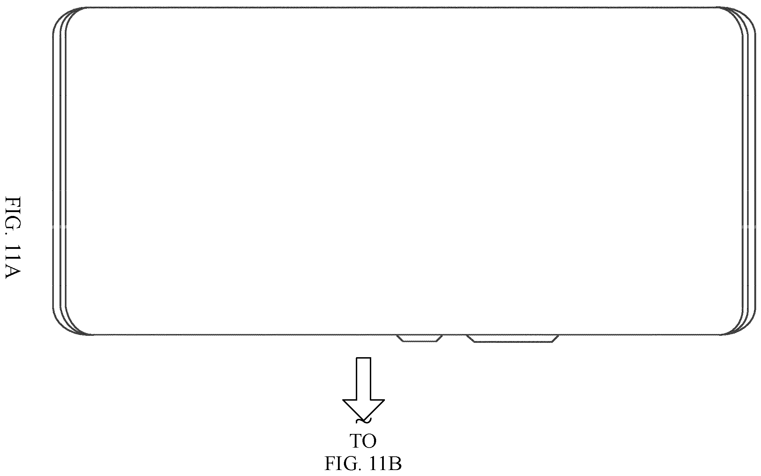

It should be noted that the service widget in this embodiment of this application may be invoked when the terminal device is in any one of the following states: a screen-off state, an always on display (always on display, AOD) state, a screen locked state, a home screen state, or an application running state. With reference to FIG. 11A to FIG. 13C, the following describes in detail a process of invoking a service widget in each of the foregoing states.

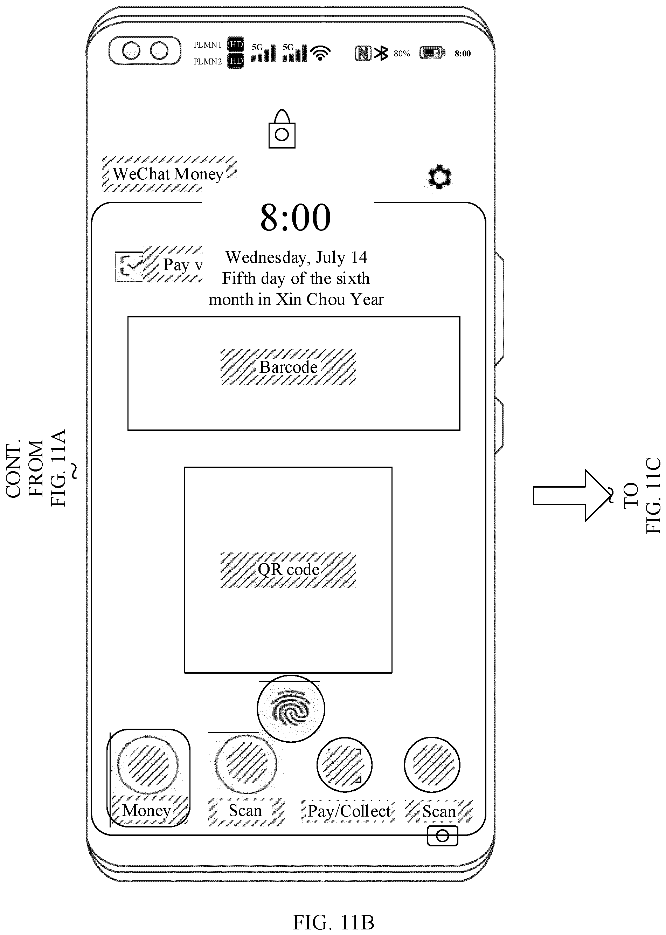

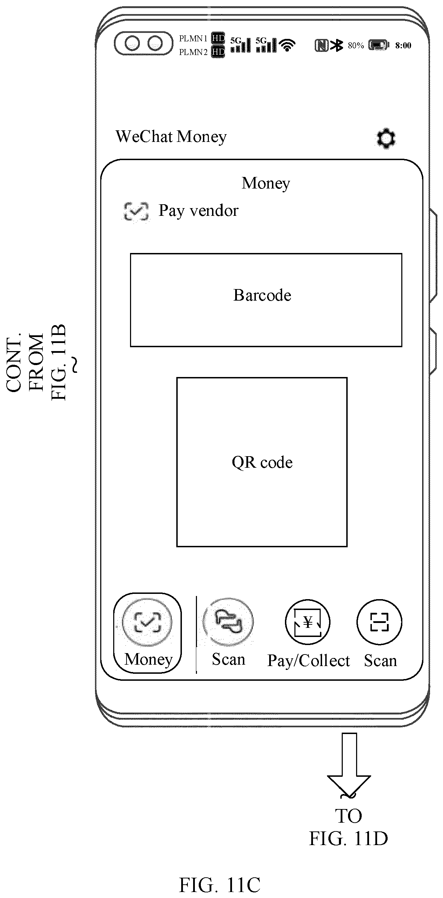

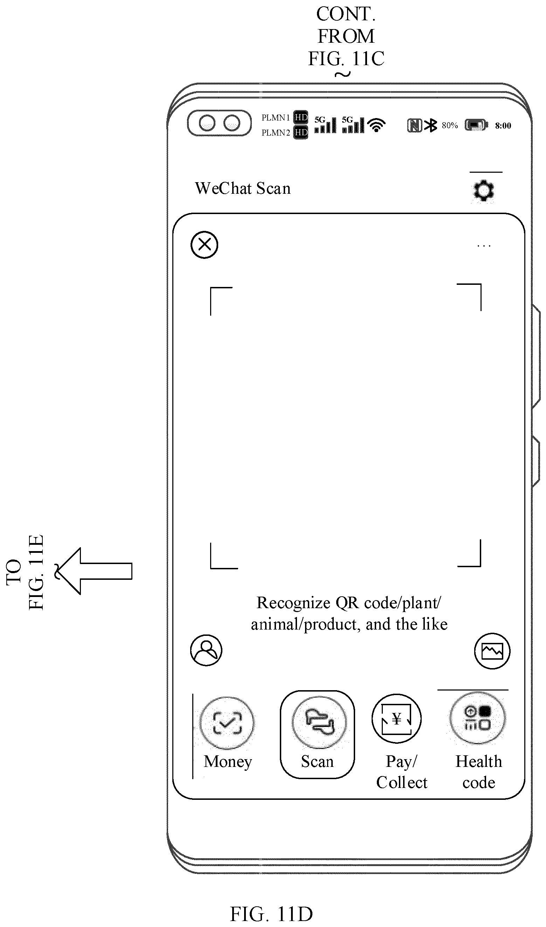

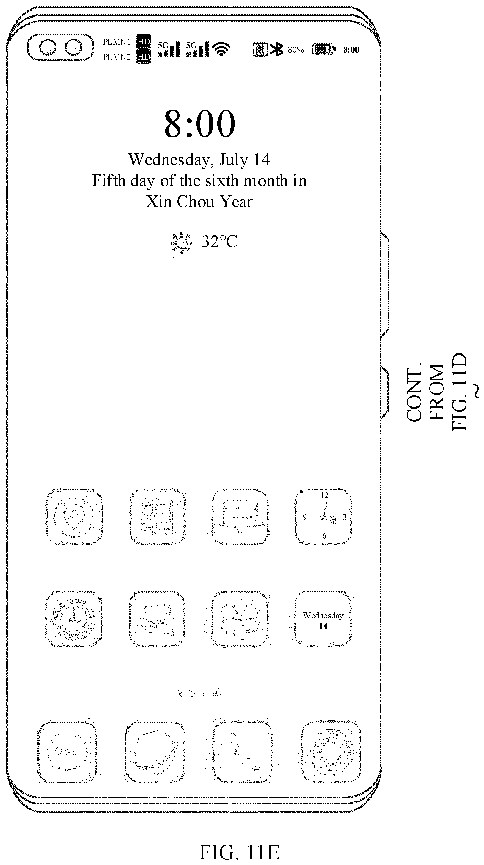

FIG. 11A to FIG. 11E are a schematic diagram of an interface in which a terminal device invokes a service widget in a screen-off state according to an embodiment of this application. As shown in FIG. 11A, the terminal device receives a first operation in the screen-off state, and displays an interface shown in FIG. 11B. The interface is a lock screen, and a blurred contour of the service widget is displayed above lock screen wallpaper. In this case, the terminal device receives an operation of performing unlocking/entering a home screen, and displays an interface shown in FIG. 11C. The interface includes a service widget, and the service widget includes a WeChat Money service. In the interface shown in FIG. 11C, the terminal device receives a service switching operation of a user (for example, the user taps a Scan icon), and displays an interface shown in FIG. 11D. A service displayed on the service widget is a WeChat Scan service. After the user completes using the service provided by the service widget, the terminal device displays an interface shown in FIG. 11E in response to an operation of exiting the service widget by the user. The interface is a home screen of the terminal device.

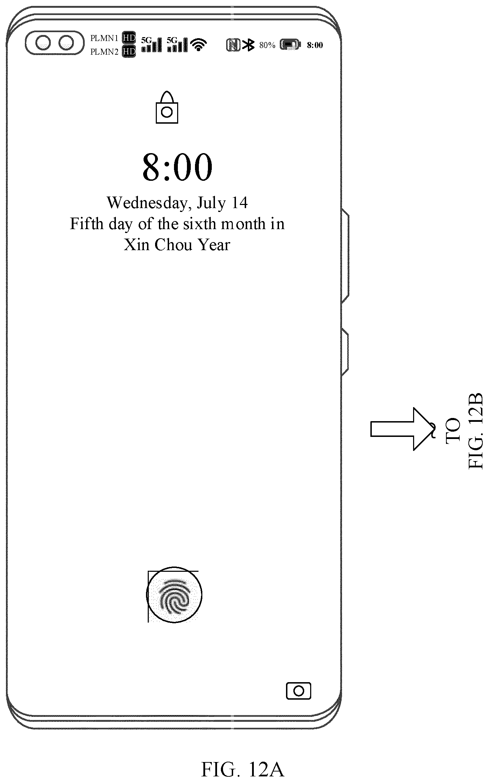

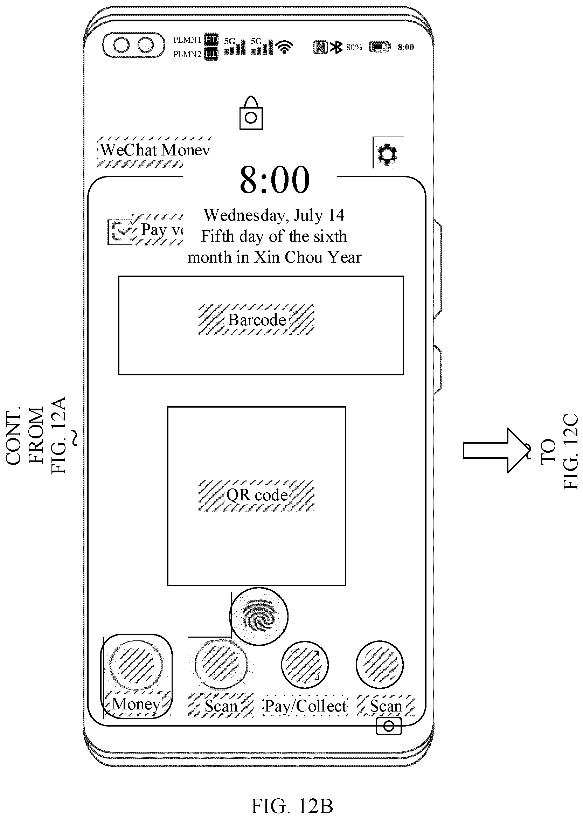

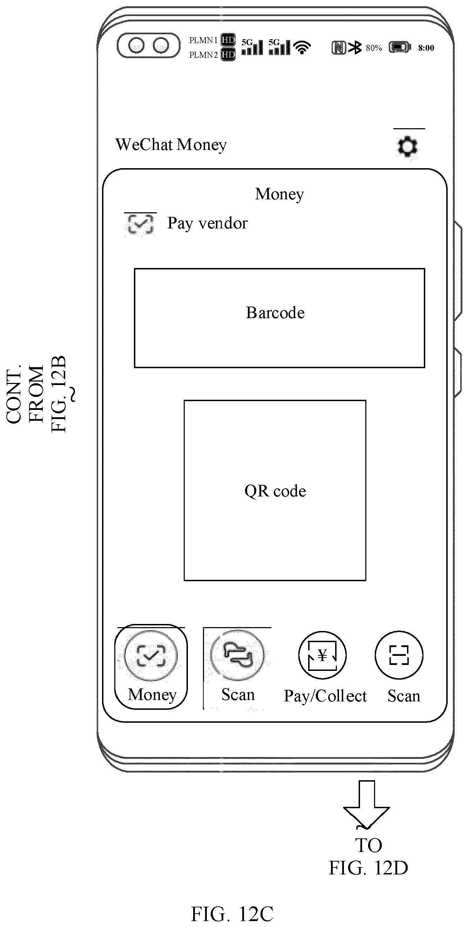

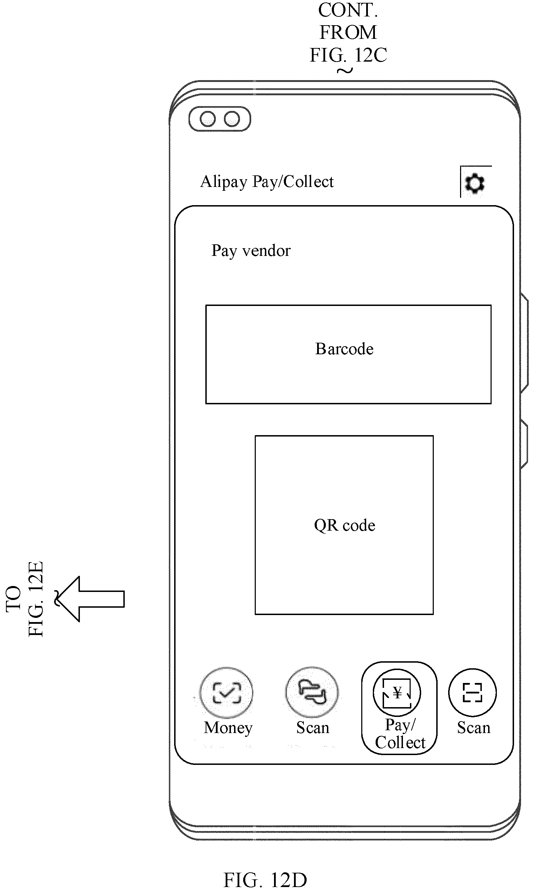

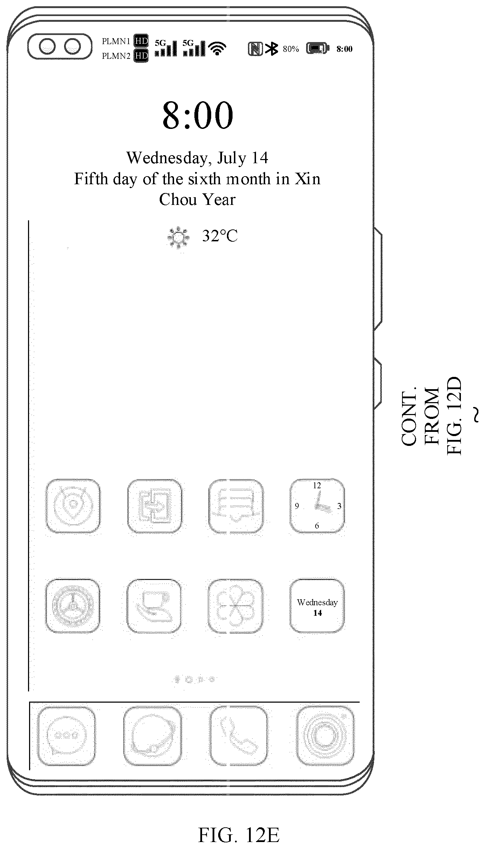

FIG. 12A to FIG. 12E are a schematic diagram of an interface in which a terminal device invokes a service widget in a screen locked state according to an embodiment of this application. As shown in FIG. 12A, the terminal device receives a first operation in the screen locked state, and displays an interface shown in FIG. 12B. The interface is a lock screen, and a blurred contour of a service widget is displayed below the lock screen. In this case, the terminal device receives an operation of performing unlocking/entering a home screen, and displays an interface shown in FIG. 12C. The interface includes a service widget, and the service widget includes a WeChat Money service. In the interface shown in FIG. 12C, the terminal device receives a service switching operation of a user (for example, the user taps an Alipay Pay/Collect icon), and displays an interface shown in FIG. 12D. A service displayed on the service widget is an Alipay Pay/Collect service. After the user completes using the service provided by the service on the service widget, the terminal device receives an operation of exiting the service widget by the user, and displays an interface shown in FIG. 12D. The interface is a home screen of the terminal device.

It should be noted that some unlock-free services may be directly displayed and used even in the screen locked state, and if the user switches an unlock-free service to a service that needs to be unlocked, the service on the service widget can be displayed only after the terminal device is unlocked.

It should be understood that both the interface shown in FIG. 11B and the interface shown in FIG. 12A are lock screens after a screen of the terminal device is locked.

It should be further understood that in FIG. 11A to FIG. 12E, if the terminal device does not exit a currently used application before the screen is locked, in the scenarios shown in FIG. 11A to FIG. 12E, in response to operations of invoking the service widget and performing unlocking, the terminal device displays the service widget above an interface of the previously running application after the terminal device is unlocked. In other words, in the interfaces shown in FIG. 11C and FIG. 12C, the terminal device displays the service widget above the interface of the previously running application. After exiting the service widget, the terminal device still displays the interface of the application that the terminal device does not exit before the screen is locked.

The service widget shown in FIG. 11C and the service widget shown in FIG. 12C each may be an interface displayed when the user invokes the service widget for the first time. In this case, a service included in the service widget may not be a service expected by the user. Therefore, the user needs to perform an operation of switching a service page.

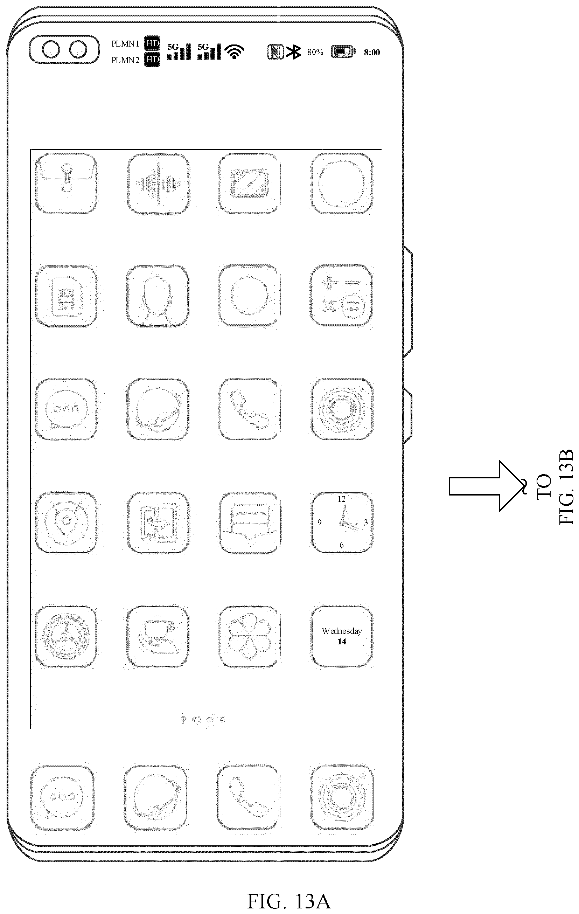

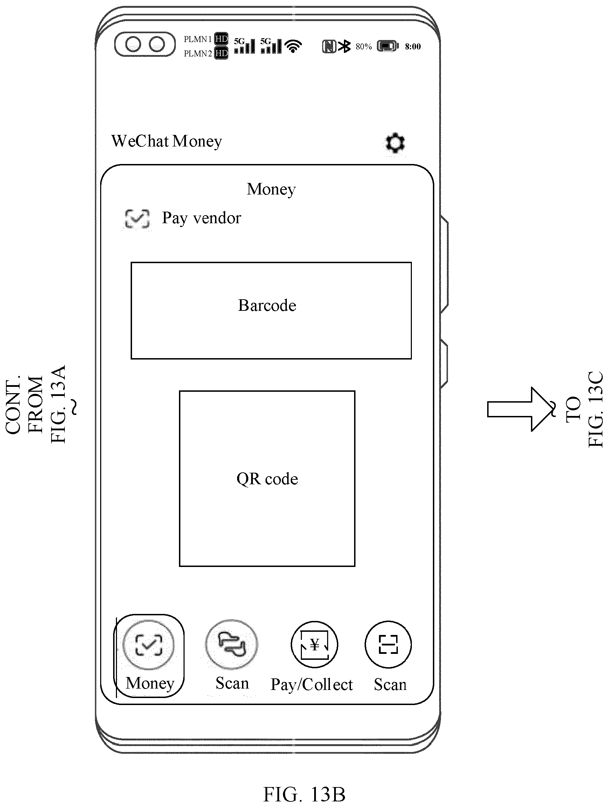

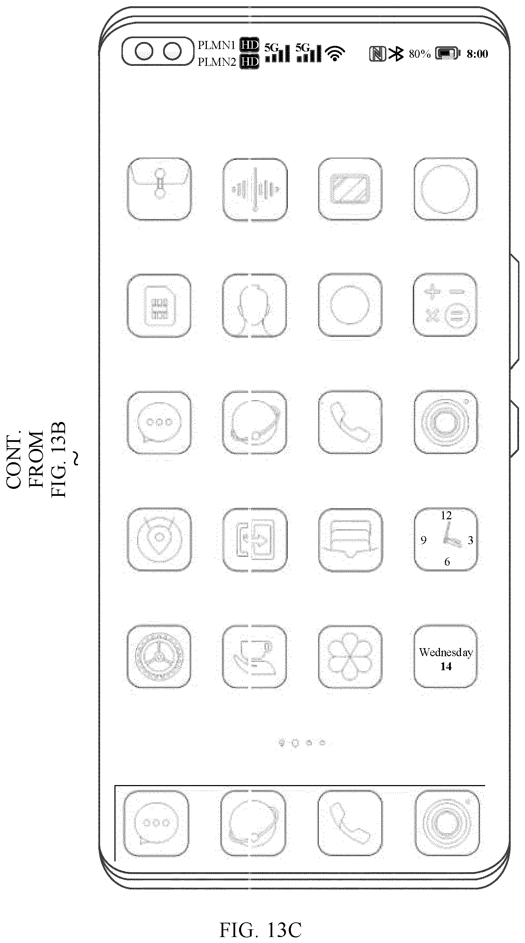

FIG. 13A to FIG. 13C are a schematic diagram of an interface in which a terminal device invokes a service widget in a home screen state according to an embodiment of this application. As shown in FIG. 13A, the terminal device receives a first operation in the home screen state (or in an unlocked state in which no application is running), and displays an interface shown in FIG. 13B. The interface is a home screen of the terminal device, and displays a service widget above the home screen. After a user completes using a service provided by the service widget, the terminal device receives an operation of exiting the service widget by the user, and displays an interface shown in FIG. 13C. The interface is completely the same as the interface shown in FIG. 13A.

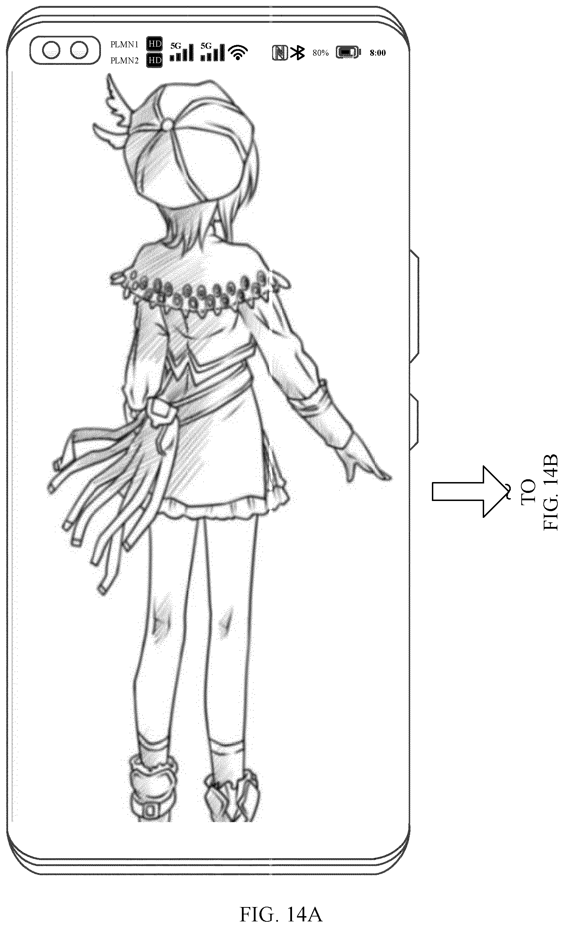

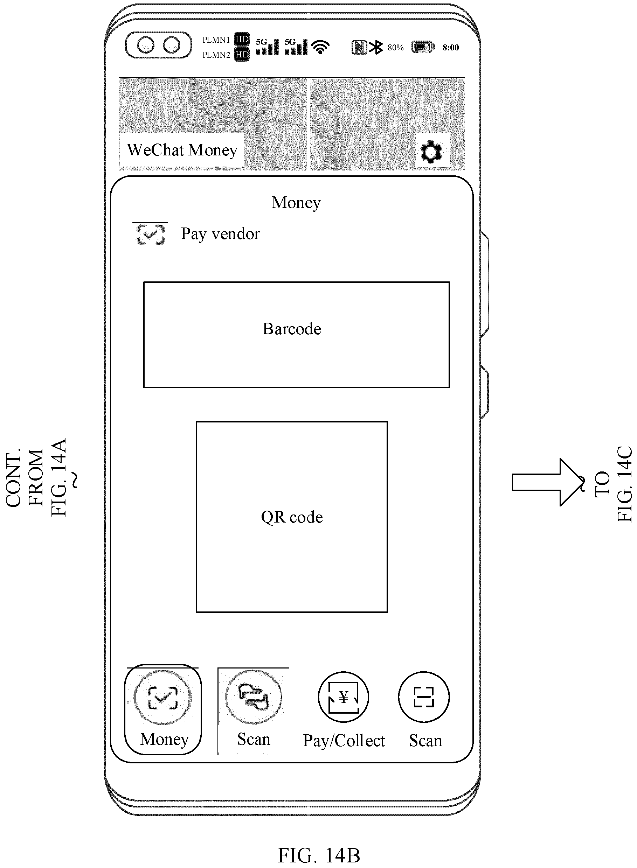

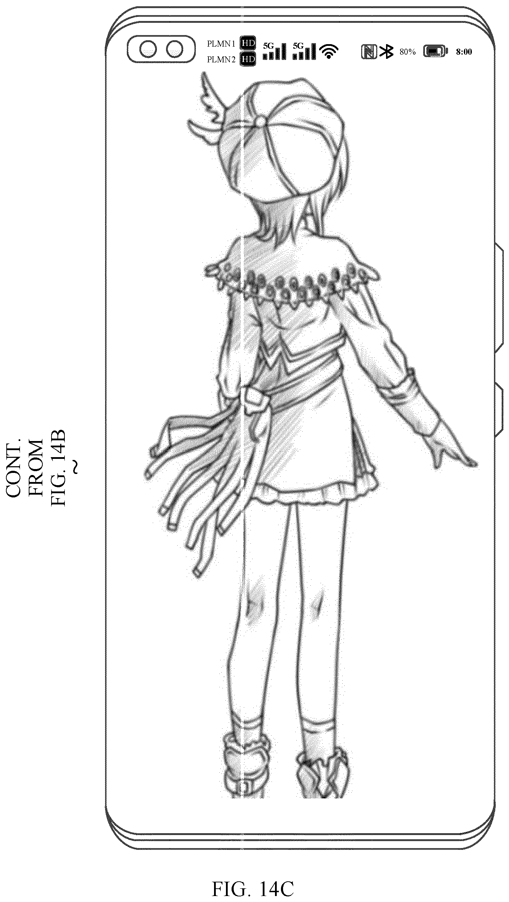

FIG. 14A to FIG. 14C are a schematic diagram of an interface in which a terminal device invokes a service widget in an application running state according to an embodiment of this application. In an interface shown in FIG. 14A, a video is being played in the foreground of the terminal device. The terminal device receives a first operation, and displays an interface shown in FIG. 14B. The interface includes a service widget, and the service widget may be directly displayed above a video playback page. In other words, the video playback page continues to be displayed below the service widget. It should be understood that when the service widget is displayed in full screen, a blurred video playback page may be displayed in an interface not covered by the service widget. Playback of the video below the service widget may be resumed, paused, muted, or the like based on a default manner of a system. After a user completes using a service provided by the service widget, the terminal device receives an operation of exiting the service widget by the user, and displays an interface shown in FIG. 14C. The interface is the video playback interface shown in FIG. 14A, and the user can continue to watch the video.

It should be understood that the interface shown in FIG. 14A may alternatively be a music playback interface.

It should be understood that services displayed on the service widgets shown in FIG. 13A to FIG. 14C may be services intelligently recommended by the terminal device based on a current location and/or time. The user may directly use the service provided by the current service widget, and does not need to switch to another service.

Based on this, the service widget in this embodiment of this application may be invoked when the terminal device is in any state, and a service is directly reached. Even if a current service is not a service that the user needs to use, the currently displayed service may be switched to a target service on a current service widget. A switching process is simple and quick. After the user completes using the service provided by the service widget, the user exits the service widget, and can still return to a state before the service widget is invoked, so that when using a service provided by an application, the user may not need to enable the application in which the service is located, and may not need to terminate the currently running application, thereby improving user experience.

Based on the content described in the foregoing embodiments, the following specifically describes a service widget display method for better understanding of embodiments of this application.

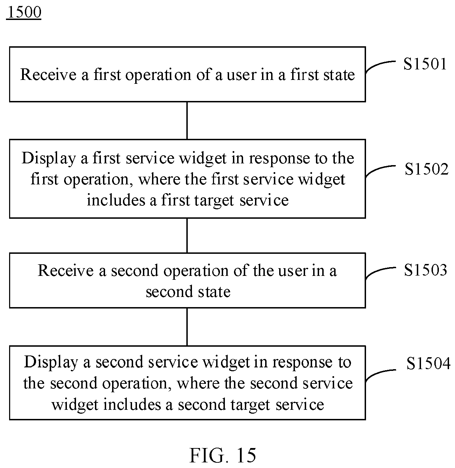

FIG. 15 is a schematic flowchart of a service widget display method according to an embodiment of this application. It should be understood that the method may be performed by an electronic device. As shown in FIG. 15, the method 1500 may include the following steps:
S1501: Receive a first operation of a user in a first state.
S1502: Display a first service widget in response to the first operation, where the first service widget includes a first target service.
S1503: Receive a second operation of the user in a second state.
S1504: Display a second service widget in response to the second operation, where the second service widget includes a second target service.

The first target service is different from the second target service, and one or more of the following information of the electronic device in the first state and the second state are different: a current location and current time of the electronic device.

In this embodiment of this application, when receiving an operation of invoking a service widget by the user, the electronic device may recommend, based on the current location and/or the current time of the electronic device, a service that is most likely to be used by the user, so that when using a service provided by an application, the user does not need to invoke a corresponding service by performing another operation. Therefore, steps are simple, and operations are convenient. In addition, a service page can be directly reached, so that user experience is improved.

It should be understood that the first operation and the second operation may be any manner of invoking a service widget shown in Table 1.

The first target service is a service that the user expects to use in the first state. The second service is a service that the user expects to use in the second state. For example, in Scenario 1 and Scenario 2 in the foregoing embodiment, different services are recommended to the user at different locations, or for example, in Scenario 3 in the foregoing embodiment, different services are recommended to the user at a same location and at different time.

It should be understood that a location of the electronic device may be obtained by using a global positioning system (global positioning system, GPS), wireless fidelity (wireless fidelity, Wi-Fi), or a base station.

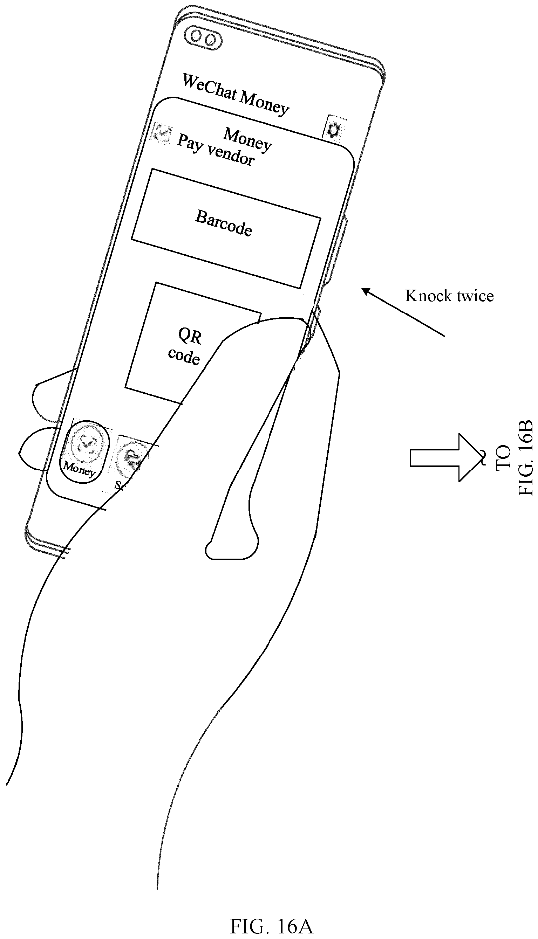

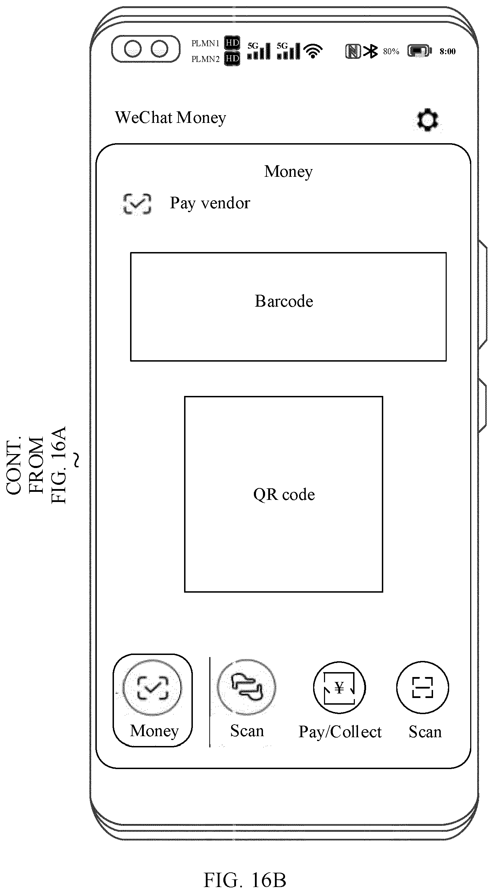

FIG. 16A and FIG. 16B are a schematic diagram of invoking a service widget according to an embodiment of this application. As shown in FIG. 16A, the user holds a mobile phone with one hand, and double-taps the back of the mobile phone with an index finger or a middle finger. In this case, an interface shown in FIG. 16B is displayed in the foreground of the electronic device. Content displayed in the interface may be referred to as the foregoing first service widget or second service widget. The display interface includes a WeChat collection service (which may be, for example, the foregoing first target service or the foregoing second target service), a WeChat Scan service icon, a WeChat Money service icon, an Alipay Pay/Collect service icon, and an Alipay Scan service icon.

In an optional embodiment, the first target service includes a plurality of sub-services, and the displaying a first service widget in response to the first operation includes: displaying a first sub-service in the first service widget in response to the first operation.

For example, a plurality of sub-services included in the WeChat Money service are other sub-services such as Balance, Receive Money, Reward Code, Split Bill, Packets Nearby, and Transfer to Bank Card/Mobile No.

In an optional embodiment, the method 1500 further includes: receiving a third operation of the user in a third state, where one or more of the following information of the electronic device in the third state and the first state are different: the current location and the current time of the electronic device; and displaying a third service widget in response to the third operation, where the third service widget includes a second sub-service, the second sub-service is one of the plurality of sub-services, and the second sub-service is different from the first sub-service.

It should be understood that the third operation may be any manner shown in Table 1.

According to the foregoing embodiment of this application, the electronic device may recommend a sub-service of an application level to the user based on a use habit of the user, a location, and time information, in other words, may recommend a further divided service type that belongs to a same application service, so that user experience is improved.

**In** an optional embodiment, the method 1500 further includes: receiving a fourth operation performed by the user on the first service widget; and switching the first sub-service in the first service widget to a third sub-service in response to the fourth operation, where the third sub-service is one of the plurality of sub-services, and the third sub-service is different from the first sub-service.

It should be understood that for the sub-service switching process, refer to related descriptions in FIG. 8A to FIG. 8E. Details are not described herein again.

**In** an optional embodiment, the method 1500 further includes: after the first service widget is displayed, receiving a fifth operation performed by the user on the first service widget; and switching the first target service displayed in the first service widget to a third target service in response to the fifth operation.

The fifth operation is an operation of switching to a different service. For a specific switching manner, refer to related descriptions in FIG. 8A to FIG. 8E. Details are not described herein again. **In** an optional embodiment, the first service widget, the second service widget, and the third service widget include a first area and a second area, the first area includes one or more service options, and the second area is used to display service information corresponding to a selected service option.

For example, in the accompanying drawings in embodiments of this application, an area in which a service icon is located is the first area, and an area in which service content corresponding to the service icon is displayed is the second area.

**In** an optional embodiment, the first area includes a first sub-area and a second sub-area, the first sub-area is used to display a first-type service option, and a user of the second sub-area displays a second-type service option.

**In** an optional embodiment, the first-type service option is a service option preset by the user, and the second-type service option is a service option recommended by the electronic device to the user.

For example, the WeChat Money service icon 1002, the WeChat Scan service icon 1003, and the Alipay Pay/Collect service icon 1004 in the customization area shown in FIG. 10B(1) each may be the first-type service option. The Transport service icon 1010 in the recommendation area shown in FIG. 10B(1) may be the second-type service option.

It should be understood that a service option recommended by the electronic device to the user may be a recommendation made based on a location and/or time of the electronic device.

In an optional embodiment, a service corresponding to the second-type service option is a second-type service, and the second-type service includes the first target service, the second target service, or the third target service.

With reference to the foregoing example, the second-type service option is a Transport service icon, and a service corresponding to the Transport service icon is a Transport service. The Transport service may be referred to as a target service. The Transport service includes a plurality of sub-services such as a metro taking service (an electronic metro code), a bus taking service (a bus code), and a taxi hailing service.

In an optional embodiment, the first service widget and the service widget include a plurality of same service options, and an order of the plurality of service options in a first area of the first service widget is different from an order of the plurality of service options in a first area of the second service widget.

For example, the service widget included in the interface shown in FIG. 5C in Scenario 1 may be referred to as the first service widget, and a plurality of service options included in a first area of the first service widget are sequentially the WeChat Scan icon 502, the WeChat Money icon 503, the Alipay Pay/Collect icon 504, and the Alipay Scan icon 505 from left to right. The service widget included in the interface shown in FIG. 6C in Scenario 2 may be referred to as the second service widget, and a plurality of service options included in a first area of the second service widget are sequentially the Transport service icon 605, the WeChat Scan icon 602, the WeChat Money icon 603, and the Alipay Pay/Collect icon 604 from left to right.

In an optional embodiment, a service option corresponding to the first target service is located at a first location in the first area of the first service widget, and a service option corresponding to the second target service is located at a second location in the first area of the first service widget; and the service option corresponding to the second target service is located at a third location in the first area of the second service widget, and the service option corresponding to the first target service is located at a fourth location in the first area of the second service widget, where a location of the first location in the first area is the same as a location of the third location in the first area; and a location of the second location in the first area is the same as or different from a location of the fourth location in the first area.

With reference to the examples shown in Scenario 1 and Scenario 2, in Scenario 1, the service widget included in the interface shown in FIG. 5E is referred to as the first service widget, a Money service corresponding to a WeChat payment code included in the first service widget is referred to as the first target service, and a WeChat Money service icon corresponding to the first target service is referred to as a service option (a first service option) corresponding to the first target service. In Scenario 2, the service widget included in the interface shown in FIG. 6C is referred to as the second service widget, a Transport service corresponding to an electronic metro card included in the second service widget is referred to as the second target service, and a Transport service icon corresponding to the second target service is referred to as a service option (a second service option) corresponding to the second target service.

It can be learned from the interface shown in FIG. 5E that the first service option is located on the leftmost side of the first area of the first service widget. It can be learned from the interface shown in FIG. 6C that the second service option is located on the leftmost side of the first area of the second service widget. Locations of the two service options are the same.

It can be learned from the interface shown in FIG. 6C that the first service option is located at the third location in the first area of the second service widget from left to right. It can be learned from the interface shown in FIG. 5E that the first service option is not displayed in the first area of the first service widget.

In an optional embodiment, at least one service option is different in a plurality of service options included in the first service widget and a plurality of service options included in the second service widget.

With reference to the foregoing example of the first service widget and the second service widget, it can be learned that the first service widget and the second service widget each include a WeChat Scan icon, a WeChat Money icon, and an Alipay Pay/Collect icon. However, the first service widget includes an Alipay Scan icon, and the second service widget includes a Transport service icon. The two service icons are different.

In an optional embodiment, the plurality of service options included in the first service widget include a first service option, the first service option is different from the plurality of service options included in the second service widget, and a service corresponding to the first service option is the first target service.

The first service widget may be the interface shown in FIG. 6C, and a first service option included in the interface is the Transport service icon. The second service widget may be the interface shown in FIG. 7A(3), and the interface does not include the Transport service. In other words, the first service option and the second service option include a plurality of different service options, and the Transport service corresponding to the Transport service icon is a target service.

In an optional embodiment, the plurality of service options included in the second service widget include a second service option, the second service option is different from the plurality of service options included in the first service widget, and a service corresponding to the second service option is the second target service.

With reference to the example in which the second service widget is the interface shown in FIG. 7A(3), and the first service widget is the interface shown in FIG. 6C, an Alipay Scan icon included in the second service widget is different from the plurality of service icons included in the first service widget, and a service corresponding to the Alipay Scan icon included in the second service widget is the second target service.

In an optional embodiment, the service option includes one or more of the following services: a code scanning service, a payment service, a collection service, a check-in service, and a transport service.

In an optional embodiment, in the first state, the electronic device is running a first application, and displays an application interface of the first application; in a process in which the electronic device displays the first service widget, the electronic device continues running the first application; and the method 1500 further includes: The electronic device receives a sixth operation performed by the user on the first target service; and in response to the sixth operation, the electronic device completes the first target service, exits the first service widget, and displays the application interface of the first application.

It should be understood that the sixth operation may be an operation manner that is of returning to an upper-level application and that is preset by the electronic device, or another service widget exiting manner (for example, sliding up from a lower edge of the first service widget, or tapping a page outside a widget area, for example, a blank page or a blurred page) preset by a system.

In an optional embodiment, the first application includes an application that supports playback of video or audio content, and the electronic device keeps the first application playing a video or audio in the process in which the electronic device displays the first service widget.

Optionally, the first application may continue to be displayed below the first service widget based on a default manner, for example, resuming playback, terminating playback, pausing playback, or muting, of the system.

Optionally, a blurring operation may be performed on the currently running first application when the first service widget is displayed, so that the first service widget is displayed above a blurred layer, or the first service widget is directly displayed on the currently running application, and some pages that cannot be covered by the first service widget can be normally displayed.

Optionally, the first service widget may completely cover a display page of the first application. In this case, the first application switches to the background for running, and the first service widget runs in the foreground. When exiting the first service widget, the electronic device switches the first application to the foreground to continue running. It should be understood that back-and-forth switching may be performed between the foregoing two display manners of the first service widget. For example, the first service widget may be switched back and forth between full-screen display and non-full-screen display.

In this embodiment of this application, when the electronic device receives the first operation, if there is a running application in the foreground, the electronic device displays the first service widget on the currently running application without interrupting the currently running application. In addition, when the electronic device exits a first page, the electronic device may switch the application to the foreground for running, so that after completing using a service provided by the service widget, the user may not need to enable the previous application again, thereby improving user experience.

In an optional embodiment, in the first state, the electronic device is in any one of the following states: a screen-off state, a screen-on locked state, and a screen-on unlocked state.

The foregoing describes the method provided in embodiments of this application with reference to FIG. 5A to FIG. 16B. The following describes an apparatus for performing the foregoing method in embodiments of this application.

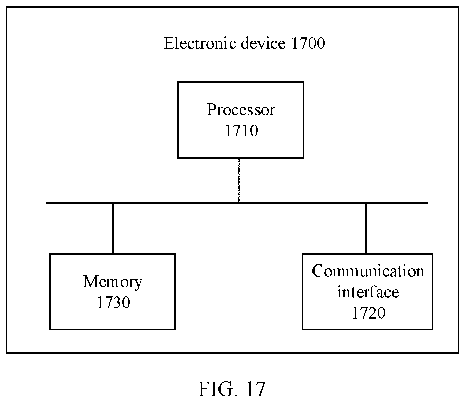

FIG. 17 is a schematic block diagram of an electronic device 1700 according to an embodiment of this application. The electronic device 1700 includes a processor 1710, a communication interface 1720, and a memory 1730.

The processor 1710, the communication interface 1720, and the memory 1730 communicate with each other through an internal connection path. The memory 1730 is configured to store instructions. The processor 1710 is configured to execute the instructions stored in the memory 1730, to control the communication interface 1720 to send a signal and/or receive a signal.

It should be understood that functions of the electronic device in the foregoing method embodiments may be integrated into the electronic device 1700, and the electronic device 1700 may be configured to perform the steps and/or procedures corresponding to the electronic device in the foregoing method embodiments. Optionally, the memory 1730 may include a read-only memory and a random access memory, and provides instructions and data to the processor. A part of the memory may further include a non-volatile random access memory. For example, the memory may further store information about a device type. The processor 1710 may be configured to execute the instructions stored in the memory. In addition, when the processor executes the instructions, the processor may perform the steps and/or procedures corresponding to the electronic device in the foregoing method embodiments.

It should be understood that in this embodiment of this application, the processor 1710 may be a central processing unit (central processing unit, CPU), or may be another general-purpose processor, a digital signal processor (digital signal processing, DSP), an application-specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

This application further provides a computer-readable storage medium. The computer-readable storage medium is configured to store a computer program, and the computer program is configured to implement the method corresponding to the electronic device in the foregoing method embodiments.

This application further provides a computer program product. The computer program product includes a computer program (which may also be referred to as code or instructions). When the computer program runs on a computer, the computer may perform the method corresponding to the electronic device shown in the foregoing method embodiments.

A person of ordinary skill in the art may be aware that, in combination with the examples described in embodiments disclosed in this specification, units and algorithm steps may be implemented by electronic hardware or a combination of computer software and electronic hardware. Whether these functions are implemented in a hardware or software manner depends on specific applications and design constraints of the technical solutions. A person skilled in the art may use different methods to implement the described functions for each specific application, but it should not be considered that the implementation goes beyond the scope of this application.

It may be clearly understood by a person skilled in the art that, for convenience and brevity of description, for a specific working process of the described system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and components displayed as units may or may not be physical units, in other words, may be located in one place, or may be distributed on a plurality of network units. Some or all of the units may be selected based on an actual requirement, to achieve the objectives of the solutions in embodiments. In addition, functional units in embodiments of this application may be integrated into one processing unit, or each unit may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any person skilled in the art can readily figure out variations or replacements within the technical scope disclosed in this application, and these variations or replacements shall fall within the protection scope of this application. Therefore, the protection scope of this application shall be subject to the protection scope of the claims.

## Claims

1. A service widget display method, applied to an electronic device, wherein the method comprises:
receiving a first operation of a user in a first state, wherein the electronic device is running a first application, and displays an application interface of the first application in the first state;
displaying a first service widget in response to the first operation, wherein the first service widget comprises a first target service (801-806), and in a process in which the electronic device displays the first service widget, the electronic device continues running the first application;
wherein the first target service comprises a plurality of sub-services (807-811), and the displaying a first service widget in response to the first operation comprises:
displaying a first sub-service that is recommended by the electronic device based on a current location and/or current time in the first service widget in response to the first operation;
receiving a sixth operation performed by the user on the first target service; and
in response to the sixth operation, completing, by the electronic device, the first target service, exiting the first service widget, and displaying the application interface of the first application;
wherein the method further comprises:
receiving a third operation of the user in a third state, wherein one or more of the following information of the electronic device in the third state and the first state are different: the current location and the current time of the electronic device; and
displaying a third service widget in response to the third operation, wherein the third service widget comprises a second sub-service that is recommended by the electronic device based on a current location and/or current time, the second sub-service is one of the plurality of sub-services, and the second sub-service is different from the first sub-service,
wherein the first application comprises an application that supports playback of video or audio content, and the electronic device keeps the first application playing a video or audio in the process in which the electronic device displays the first service widget.

2. The method according to claim 1, wherein the method further comprises:
receiving a second operation of the user in a second state; and
displaying a second service widget in response to the second operation, wherein the second service widget comprises a second target service, wherein
the first target service is different from the second target service, and one or more of the following information of the electronic device in the first state and the second state are different: a current location and current time of the electronic device.

3. The method according to claim 1, wherein the method further comprises:
receiving a fourth operation performed by the user on the first service widget;
switching the first sub-service in the first service widget to a third sub-service in response to the fourth operation, wherein the third sub-service is one of the plurality of sub-services, and the third sub-service is different from the first sub-service;
after the first service widget is displayed, receiving a fifth operation performed by the user on the first service widget; and
switching the first target service in the first service widget to a third target service in response to the fifth operation.

4. The method according to claim 3, wherein the first service widget and the second service widget each comprise a first area and a second area, the first area comprises one or more service options, the service option comprises one or more of the following services: a code scanning service, a payment service, a collection service, a check-in service, and a transport service, and the second area is used to display service information corresponding to a selected service option.

5. The method according to claim 4, wherein the first area comprises a first sub-area and a second sub-area, the first sub-area is used to display a first-type service option, and the second sub-area is used to display a second-type service option;
wherein the first-type service option is a service option preset by the user, the second-type service option is a service option recommended by the electronic device to the user, a service corresponding to the second-type service option is a second-type service, and the second-type service comprises the first target service, the second target service, or the third target service.

6. The method according to claim 4, wherein the first service widget and the second service widget comprise a plurality of same service options, and an order of the plurality of service options in a first area of the first service widget is different from an order of the plurality of service options in a first area of the second service widget.

7. The method according to claim 6, wherein a service option corresponding to the first target service is located at a first location in the first area of the first service widget, and a service option corresponding to the second target service is located at a second location in the first area of the first service widget; and
the service option corresponding to the second target service is located at a third location in the first area of the second service widget, and the service option corresponding to the first target service is located at a fourth location in the first area of the second service widget, wherein
a location of the first location in the first area is the same as a location of the third location in the first area; and
a location of the second location in the first area is the same as or different from a location of the fourth location in the first area.

8. The method according to claim 4, wherein at least one service option is different in a plurality of service options comprised in the first service widget and a plurality of service options comprised in the second service widget.

9. The method according to claim 8, wherein the plurality of service options comprised in the first service widget comprise a first service option, the first service option is different from the plurality of service options comprised in the second service widget, and a service corresponding to the first service option is the first target service.

10. The method according to claim 8, wherein the plurality of service options comprised in the second service widget comprise a second service option, the second service option is different from the plurality of service options comprised in the first service widget, and a service corresponding to the second service option is the second target service.

11. The method according to any one of claims 1 to 10, wherein in the first state, the electronic device is in any one of the following states: a screen-off state, a screen-on locked state, and a screen-on unlocked state.

12. An electronic device (1700), comprising a processor (1710) and a memory (1730), wherein the processor (1710) is coupled to the memory (1730), the memory (1730) is configured to store a computer program, and when the processor (1710) invokes the computer program, the electronic device (1700) is enabled to perform the method according to any one of claims 1 to 11.

13. A computer-readable storage medium, configured to store a computer program, wherein the computer program comprises instructions for implementing the method according to any one of claims 1 to 11.

## Patentansprüche

1. Verfahren zur Anzeige eines Dienst-Widgets, angewendet auf eine elektronische Vorrichtung, wobei das Verfahren umfasst:
Empfangen einer ersten Benutzereingabe in einem ersten Zustand, wobei die elektronische Vorrichtung eine erste Anwendung ausführt und in dem ersten Zustand eine Anwendungsoberfläche der ersten Anwendung anzeigt;
Anzeigen eines ersten Dienst-Widgets als Reaktion auf die erste Operation, wobei das erste Dienst-Widget einen ersten Zieldienst (801-806) umfasst, und wobei die elektronische Vorrichtung während des Prozesses, in dem die elektronische Vorrichtung das erste Dienst-Widget anzeigt, die erste Anwendung weiter ausführt;
wobei der erste Zieldienst eine Mehrzahl von Teildiensten (807-811) umfasst und das Anzeigen eines ersten Dienst-Widgets als Reaktion auf die erste Operation umfasst:
Anzeigen eines ersten Teildienstes, der von der elektronischen Vorrichtung basierend auf einem aktuellen Standort und/oder einer aktuellen Zeit empfohlen wird, in dem ersten Dienst-Widget als Reaktion auf die erste Operation;
Empfangen einer sechsten Operation, die vom Benutzer auf dem ersten Zieldienst ausgeführt wird; und
als Reaktion auf die sechste Operation: Vervollständigen des ersten Zieldienstes durch die elektronische Vorrichtung, Beenden des ersten Dienst-Widgets und Anzeigen der Anwendungsoberfläche der ersten Anwendung;
wobei das Verfahren ferner umfasst:
Empfangen einer dritten Operation des Benutzers in einem dritten Zustand, wobei sich eine oder mehrere der folgenden Informationen der elektronischen Vorrichtung im dritten Zustand und im ersten Zustand unterscheiden: der aktuelle Standort und die aktuelle Zeit der elektronischen Vorrichtung; und
Anzeigen eines dritten Dienst-Widgets als Reaktion auf die dritte Operation, wobei das dritte Dienst-Widget einen zweiten Teildienst umfasst, der von der elektronischen Vorrichtung basierend auf einem aktuellen Standort und/oder einer aktuellen Zeit empfohlen wird, wobei der zweite Teildienst einer der Mehrzahl von Teildiensten ist und sich der zweite Teildienst von dem ersten Teildienst unterscheidet,
wobei die erste Anwendung eine Anwendung umfasst, die die Wiedergabe von Video- oder Audioinhalten unterstützt, und die elektronische Vorrichtung die erste Anwendung während des Prozesses, in dem die elektronische Vorrichtung das erste Dienst-Widget anzeigt, weiterhin ein Video oder Audio wiedergeben lässt.

2. Verfahren nach Anspruch 1, wobei das Verfahren ferner umfasst:
Empfangen einer zweiten Operation des Benutzers in einem zweiten Zustand; und
Anzeigen eines zweiten Dienst-Widgets als Reaktion auf die zweite Operation, wobei das zweite Dienst-Widget einen zweiten Zieldienst umfasst, wobei
Der erste Zieldienst unterscheidet sich vom zweiten Zieldienst, und eine oder mehrere der folgenden Informationen des elektronischen Geräts im ersten Zustand und im zweiten Zustand sind unterschiedlich: ein aktueller Standort und eine aktuelle Zeit des elektronischen Geräts.

3. Verfahren nach Anspruch 1, wobei das Verfahren ferner umfasst:
Empfangen einer vierten Operation, die durch den Benutzer auf dem ersten Service-Widget durchgeführt wird;
Umschalten des ersten Teil-Dienstes im ersten Service-Widget auf einen dritten Teil-Dienst als Reaktion auf die vierte Operation, wobei der dritte Teil-Dienst einer der mehreren Teil-Dienste ist und der dritte Teil-Dienst sich vom ersten Teil-Dienst unterscheidet;
nachdem das erste Service-Widget angezeigt wurde, Empfangen einer fünften Operation, die durch den Benutzer auf dem ersten Service-Widget durchgeführt wird; und
Umschalten des ersten Zieldienstes im ersten Service-Widget auf einen dritten Zieldienst als Reaktion auf die fünfte Operation.

4. Verfahren nach Anspruch 3, wobei das erste Service-Widget und das zweite Service-Widget jeweils einen ersten Bereich und einen zweiten Bereich umfassen, wobei der erste Bereich eine oder mehrere Service-Optionen umfasst, wobei die Service-Option einen oder mehrere der folgenden Dienste umfasst: einen Codescan-Dienst, einen Zahlungsdienst, einen Einzugsdienst, einen Check-in-Dienst und einen Transportdienst, und der zweite Bereich dazu verwendet wird, Serviceinformationen anzuzeigen, die einer ausgewählten Service-Option entsprechen.

5. Verfahren nach Anspruch 4, wobei der erste Bereich einen ersten Teilbereich und einen zweiten Teilbereich umfasst, wobei der erste Teilbereich dazu verwendet wird, eine Service-Option eines ersten Typs anzuzeigen, und der zweite Teilbereich dazu verwendet wird, eine Service-Option eines zweiten Typs anzuzeigen;
wobei die Service-Option des ersten Typs eine durch den Benutzer voreingestellte Service-Option ist, die Service-Option des zweiten Typs eine Service-Option ist, die durch das elektronische Gerät dem Benutzer empfohlen wird, ein Dienst, der der Service-Option des zweiten Typs entspricht, ein Dienst des zweiten Typs ist, und der Dienst des zweiten Typs den ersten Zieldienst, den zweiten Zieldienst oder den dritten Zieldienst umfasst.

6. Verfahren nach Anspruch 4, wobei das erste Service-Widget und das zweite Service-Widget eine Vielzahl derselben Service-Optionen umfassen und eine Reihenfolge der Vielzahl von Service-Optionen in einem ersten Bereich des ersten Service-Widgets sich von einer Reihenfolge der Vielzahl von Service-Optionen in einem ersten Bereich des zweiten Service-Widgets unterscheidet.

7. Verfahren nach Anspruch 6, wobei eine Service-Option, die dem ersten Zieldienst entspricht, an einer ersten Position im ersten Bereich des ersten Service-Widgets angeordnet ist, und eine Service-Option, die dem zweiten Zieldienst entspricht, an einer zweiten Position im ersten Bereich des ersten Service-Widgets angeordnet ist; und
die dem zweiten Ziel-Dienst entsprechende Dienstoption befindet sich an einem dritten Ort im ersten Bereich des zweiten Dienst-Widgets, und die dem ersten Ziel-Dienst entsprechende Dienstoption befindet sich an einem vierten Ort im ersten Bereich des zweiten Dienst-Widgets, wobei
ein Ort des ersten Orts im ersten Bereich ist derselbe wie ein Ort des dritten Orts im ersten Bereich; und
ein Ort des zweiten Orts im ersten Bereich ist derselbe wie oder unterschiedlich von einem Ort des vierten Orts im ersten Bereich.

8. Verfahren nach Anspruch 4, wobei sich mindestens eine Dienstoption in einer Vielzahl von Dienstoptionen, die im ersten Dienst-Widget enthalten sind, und einer Vielzahl von Dienstoptionen, die im zweiten Dienst-Widget enthalten sind, unterscheidet.

9. Verfahren nach Anspruch 8, wobei die Vielzahl von Dienstoptionen, die im ersten Dienst-Widget enthalten sind, eine erste Dienstoption umfassen, wobei die erste Dienstoption sich von der Vielzahl von Dienstoptionen unterscheidet, die im zweiten Dienst-Widget enthalten sind, und ein Dienst, der der ersten Dienstoption entspricht, der erste Ziel-Dienst ist.

10. Verfahren nach Anspruch 8, wobei die Vielzahl von Dienstoptionen, die im zweiten Dienst-Widget enthalten sind, eine zweite Dienstoption umfassen, wobei die zweite Dienstoption sich von der Vielzahl von Dienstoptionen unterscheidet, die im ersten Dienst-Widget enthalten sind, und ein Dienst, der der zweiten Dienstoption entspricht, der zweite Ziel-Dienst ist.

11. Verfahren nach einem der Ansprüche 1 bis 10, wobei sich die elektronische Vorrichtung im ersten Zustand in einem der folgenden Zustände befindet: einem bildschirm-aus-Zustand, einem bildschirm-an-gesperrten Zustand und einem bildschirm-an-entsperrten Zustand.

12. Elektronische Vorrichtung (1700), umfassend einen Prozessor (1710) und einen Speicher (1730), wobei der Prozessor (1710) mit dem Speicher (1730) gekoppelt ist, der Speicher (1730) konfiguriert ist, um ein Computerprogramm zu speichern, und wenn der Prozessor (1710) das Computerprogramm aufruft, die elektronische Vorrichtung (1700) dazu befähigt wird, das Verfahren nach einem der Ansprüche 1 bis 11 durchzuführen.

13. Computerlesbares Speichermedium, das konfiguriert ist, ein Computerprogramm zu speichern, wobei das Computerprogramm Anweisungen zum Implementieren des Verfahrens nach einem der Ansprüche 1 bis 11 umfasst.

## Revendications

1. Procédé d'affichage de widget de service, appliqué à un dispositif électronique, dans lequel le procédé comprend :
la réception d'une première opération d'un utilisateur dans un premier état, dans lequel le dispositif électronique exécute une première application, et affiche une interface d'application de la première application dans le premier état ;
l'affichage d'un premier widget de service en réponse à la première opération, dans lequel le premier widget de service comprend un premier service cible (801-806), et dans un processus au cours duquel le dispositif électronique affiche le premier widget de service, le dispositif électronique continue d'exécuter la première application ;
dans lequel le premier service cible comprend une pluralité de sous-services (807-811), et l'affichage d'un premier widget de service en réponse à la première opération comprend :
l'affichage, dans le premier widget de service, d'un premier sous-service recommandé par le dispositif électronique sur la base d'un emplacement actuel et/ou d'une heure actuelle en réponse à la première opération ;
la réception d'une sixième opération effectuée par l'utilisateur sur le premier service cible ; et
en réponse à la sixième opération, l'exécution complète, par le dispositif électronique, du premier service cible, la sortie du premier widget de service, et l'affichage de l'interface d'application de la première application ;
dans lequel le procédé comprend en outre :
la réception d'une troisième opération de l'utilisateur dans un troisième état, dans lequel une ou plusieurs des informations suivantes du dispositif électronique dans le troisième état et le premier état sont différentes : l'emplacement actuel et l'heure actuelle du dispositif électronique ; et
l'affichage d'un troisième widget de service en réponse à la troisième opération, dans lequel le troisième widget de service comprend un deuxième sous-service recommandé par le dispositif électronique sur la base d'un emplacement actuel et/ou d'une heure actuelle, le deuxième sous-service étant l'un de la pluralité de sous-services, et le deuxième sous-service étant différent du premier sous-service,
dans lequel la première application comprend une application qui prend en charge la lecture de contenu vidéo ou audio, et le dispositif électronique maintient la première application en train de lire une vidéo ou un audio dans le processus au cours duquel le dispositif électronique affiche le premier widget de service.

2. Procédé selon la revendication 1, dans lequel le procédé comprend en outre :
la réception d'une deuxième opération de l'utilisateur dans un deuxième état ; et
l'affichage d'un deuxième widget de service en réponse à la deuxième opération, dans lequel le deuxième widget de service comprend un deuxième service cible, dans lequel
le premier service cible est différent du deuxième service cible, et une ou plusieurs des informations suivantes du dispositif électronique dans le premier état et le deuxième état sont différentes : une localisation actuelle et une heure actuelle du dispositif électronique.

3. Procédé selon la revendication 1, dans lequel le procédé comprend en outre :
la réception d'une quatrième opération effectuée par l'utilisateur sur le premier widget de service ;
la commutation du premier sous-service dans le premier widget de service vers un troisième sous-service en réponse à la quatrième opération, dans lequel le troisième sous-service est l'un de la pluralité de sous-services, et le troisième sous-service est différent du premier sous-service ;
après l'affichage du premier widget de service, la réception d'une cinquième opération effectuée par l'utilisateur sur le premier widget de service ; et
la commutation du premier service cible dans le premier widget de service vers un troisième service cible en réponse à la cinquième opération.

4. Procédé selon la revendication 3, dans lequel le premier widget de service et le deuxième widget de service comprennent chacun une première zone et une deuxième zone, la première zone comprend une ou plusieurs options de service, l'option de service comprend un ou plusieurs des services suivants : un service de scan de code, un service de paiement, un service d'encaissement, un service d'enregistrement, et un service de transport, et la deuxième zone est utilisée pour afficher des informations de service correspondant à une option de service sélectionnée.

5. Procédé selon la revendication 4, dans lequel la première zone comprend une première sous-zone et une deuxième sous-zone, la première sous-zone est utilisée pour afficher une option de service de premier type, et la deuxième sous-zone est utilisée pour afficher une option de service de deuxième type ;
dans lequel l'option de service de premier type est une option de service prédéfinie par l'utilisateur, l'option de service de deuxième type est une option de service recommandée par le dispositif électronique à l'utilisateur, un service correspondant à l'option de service de deuxième type est un service de deuxième type, et le service de deuxième type comprend le premier service cible, le deuxième service cible, ou le troisième service cible.

6. Procédé selon la revendication 4, dans lequel le premier widget de service et le deuxième widget de service comprennent une pluralité d'options de service identiques, et un ordre de la pluralité d'options de service dans une première zone du premier widget de service est différent d'un ordre de la pluralité d'options de service dans une première zone du deuxième widget de service.

7. Procédé selon la revendication 6, dans lequel une option de service correspondant au premier service cible est située à un premier emplacement dans la première zone du premier widget de service, et une option de service correspondant au deuxième service cible est située à un deuxième emplacement dans la première zone du premier widget de service ; et
l'option de service correspondant au deuxième service cible est située à un troisième emplacement dans la première zone du deuxième widget de service, et l'option de service correspondant au premier service cible est située à un quatrième emplacement dans la première zone du deuxième widget de service, dans lequel
un emplacement du premier emplacement dans la première zone est identique à un emplacement du troisième emplacement dans la première zone ; et
un emplacement du deuxième emplacement dans la première zone est identique ou différent d'un emplacement du quatrième emplacement dans la première zone.

8. Le procédé selon la revendication 4, dans lequel au moins une option de service est différente parmi une pluralité d'options de service comprises dans le premier widget de service et une pluralité d'options de service comprises dans le deuxième widget de service.

9. Le procédé selon la revendication 8, dans lequel la pluralité d'options de service comprises dans le premier widget de service comprend une première option de service, la première option de service est différente de la pluralité d'options de service comprises dans le deuxième widget de service, et un service correspondant à la première option de service est le premier service cible.

10. Le procédé selon la revendication 8, dans lequel la pluralité d'options de service comprises dans le deuxième widget de service comprend une deuxième option de service, la deuxième option de service est différente de la pluralité d'options de service comprises dans le premier widget de service, et un service correspondant à la deuxième option de service est le deuxième service cible.

11. Le procédé selon l'une quelconque des revendications 1 à 10, dans lequel dans le premier état, le dispositif électronique est dans l'un quelconque des états suivants : un état écran éteint, un état écran allumé verrouillé, et un état écran allumé déverrouillé.

12. Dispositif électronique (1700), comprenant un processeur (1710) et une mémoire (1730), dans lequel le processeur (1710) est couplé à la mémoire (1730), la mémoire (1730) est configurée pour stocker un programme informatique, et lorsque le processeur (1710) appelle le programme informatique, le dispositif électronique (1700) est activé pour mettre en œuvre le procédé selon l'une quelconque des revendications 1 à 11.

13. Support de stockage lisible par ordinateur, configuré pour stocker un programme informatique, dans lequel le programme informatique comprend des instructions pour mettre en œuvre le procédé selon l'une quelconque des revendications 1 à 11.
